# EUROPEAN PATENT APPLICATION

(11) **EP 4 516 858 A1**
(43) Date of publication of application: **05.03.2025**
(21) Application number: 23796144.6
(22) Date of filing: 14.04.2023
(51) Int. Cl.: C08L 71/00, C08K 3/013, C08K 3/36, C08K 5/541

(54) **HEAT-CURABLE PERFLUOROPOLYETHER RUBBER COMPOSITION**

(30) Priority: 28.04.2022 JP 2022074784
(71) Applicant: SHIN-ETSU CHEMICAL CO., LTD., Tokyo 1000005 (JP)
(72) Inventor: ASAHI Tomoyuki, Annaka-shi, Gunma 379-0224 (JP)
(74) Representative: Ter Meer Steinmeister & Partner
(86) International application number: PCT/JP2023/015105
(87) International publication number: WO 2023/210400

(57) **Abstract**

This heat-curable perfluoropolyether rubber composition contains specific proportions of (A) a perfluoropolyether polymer having a specific structure which has two or more alkenyl groups in the molecular chain thereof, (B) a fluorine-containing organohydrogen polysiloxane which has two or more hydrogen atoms bonded to a silicon atom in each molecule thereof, (C) a hydrosilylation reaction catalyst and (D) a hydrophobic silica powder which has a BET specific surface area of 50 m²/g or higher. As a result, this heat-curable perfluoropolyether rubber composition is capable of producing a cured article (perfluoropolyether rubber cured article) which has excellent heat resistance, chemical resistance, solvent resistance, low-temperature dependence, rubber properties (mechanical strength, elongation properties, etc.) and the like while also exhibiting excellent injection molding properties and mold release properties.

## Description

### TECHNICAL FIELD

The present invention relates to a heat-curable perfluoropolyether rubber composition that can be formed into a cured product (perfluoropolyether rubber cured product) excellent in terms of heat resistance, chemical resistance, solvent resistance, low-temperature properties, rubber properties (e.g., mechanical strength and elongation) and the like and that is excellent in terms of injection moldability and mold releasability.

### BACKGROUND ART

There have been growing instances where injection molding is used for producing rubber molded articles in order to achieve laborsaving by automation or the like. Under the circumstances, a rubber composition that can be formed into a cured product excellent in terms of heat resistance, chemical resistance, solvent resistance, low-temperature properties, rubber properties (e.g., mechanical strength and elongation) and the like and that can be injection-molded into shape in an easy and simple manner has been anticipated.

Patent Document 1 (JP-A 2002-167502) discloses a curable composition and the like that are excellent in terms of heat resistance, chemical resistance, solvent resistance, low-temperature properties and the like. However, depending on the chemical formulation of the composition, achieving a high-strength rubber properties using the above composition may involve an increase in viscosity, which makes it difficult to form the composition into a cured product by liquid injection molding system (LIMS).

Furthermore, LIMS requires that a cured product can be readily removed from a mold after molding in order to increase productivity. In this respect, there is room for improvement of the mold releasability of a cured product formed of the composition disclosed in Patent Document 1.

In Examples of Patent Document 2 (WO 2019/088132), a curable composition including a perfluoropolyether compound represented by CH₂=CHCH₂OCH₂CF₂(OC₂F₄)ₑ-(OCF₂)_{f}-CF₂CH₂OCH₂CH=CH₂ (wherein e = 40 and f = 58), an organosilicon compound having two or more silicon-bonded hydrogen atoms per molecule, and a catalyst is described. However, the inventor of the present invention conducted studies and consequently found that the rubber properties of a cured product formed of the above composition are not at sufficient levels.

### PRIOR ART DOCUMENTS

### PATENT DOCUMENTS

Patent Document 1: JP-A 2002-167502
Patent Document 2: WO 2019/088132
Patent Document 3: JP-A 2005-24695

### SUMMARY OF INVENTION

### TECHNICAL PROBLEM

The present invention was made in light of the above circumstances. An object of the present invention is to provide a heat-curable perfluoropolyether rubber composition that can be formed into a cured product (perfluoropolyether rubber cured product) excellent in terms of heat resistance, chemical resistance, solvent resistance, low-temperature properties, rubber properties (e.g., mechanical strength and elongation) and the like and that is excellent in terms of liquid injection moldability and mold releasability.

### SOLUTION TO PROBLEM

The inventor of the present invention conducted extensive studies in order to achieve the above object and consequently found that a heat-curable perfluoropolyether rubber composition comprising (A) a perfluoropolyether polymer having at least two alkenyl groups in the molecular chain, represented by the general formula (1) or (2) described later, (B) a fluorine-containing organohydrogen polysiloxane having two or more silicon-bonded hydrogen atoms per molecule, (C) a hydrosilylation catalyst and (D) a hydrophobic silica powder having a BET specific surface area of 50 m²/g or more at a specific ratio is excellent in terms of injection moldability and mold releasability and that a cured product (perfluoropolyether rubber cured product) formed of the above composition is excellent in terms of heat resistance, chemical resistance, solvent resistance, low-temperature properties, rubber properties (e.g., mechanical strength and elongation) and the like. Thus, the present invention was made.

Thus, the present invention provides the heat-curable perfluoropolyether rubber composition described below.
[1] A heat-curable perfluoropolyether rubber composition comprising:
   (A) 100 parts by weight of a perfluoropolyether polymer including having at least two alkenyl groups in the molecular chain, represented by the general formula (1) or (2) below:

      Rf(L-MWₐ)₂ (1)

      Rf(Q-(Y)_{b}-B)₂ (2)

      wherein Rf represents a perfluoropolyoxyalkylene group represented by general formula (3) below, 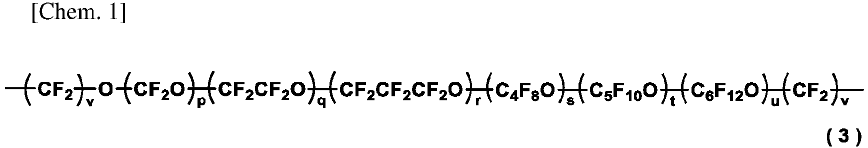
      wherein p, q, r, s, t and u each independently represent an integer of 0 to 450, p + q + r + s + t + u is an integer of 20 to 450, fluorooxyalkylene units each parenthesized with p, q, r, s, t and u may be arranged in an either block or random manner, and v's each independently represent an integer of 1 to 3,
         L's each independently represent a single bond, an oxygen atom, a sulfur atom, or a divalent organic group, M's each independently represent a single bond, a nitrogen atom, a silicon atom, a carbon atom, a phosphorus atom, a group including any of the above atoms, or a divalent to octavalent organic group, W's each independently represent an alkenyl group or a monovalent organic group having an alkenyl group serving as a terminal group, a's each independently represent an integer of 1 to 7, Q's each independently represent a single bond or a divalent organic group, Y's each independently represent a divalent organic group having an alkenyl group, b's each independently represent an integer of 1 to 10, and B's each independently represent a hydrogen atom, an alkyl group having 1 to 4 carbon atoms, or a halogen atom;
   (B) a fluorine-containing organohydrogen polysiloxane having two or more silicon-bonded hydrogen atoms per molecule, in an amount to provide 0.5 to 5 moles of the silicon-bonded hydrogen atoms (SiH groups) in the component (B) to 1 mole of the alkenyl groups in the component (A);
   (C) a hydrosilylation catalyst in an amount to provide a catalytic amount; and
   (D) 10 to 40 parts by weight of a hydrophobic silica powder having a BET specific surface area of 50 m²/g or more.
[2] The heat-curable perfluoropolyether rubber composition according to [1], wherein in the formula (1) or (2) of the component (A), Rf is a perfluoropolyoxyalkylene group represented by the general formula (3') below: 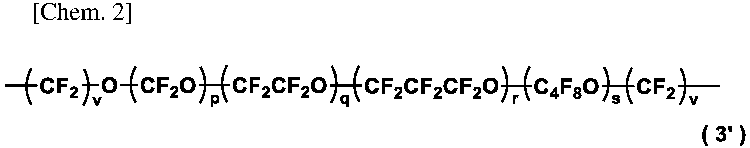 wherein p, q, r, s and v are the same as above, p + q + r + s is an integer of 20 to 450, and fluorooxyalkylene units each parenthesized with p, q, r and s may be arranged in an either block or random manner.
[3] The heat-curable perfluoropolyether rubber composition according to [1] or [2], wherein surfaces of particles of the hydrophobic silica powder of the component (D) are hydrophobized with at least one organosilicon compound selected from an organochlorosilane, an organoalkoxysilane, an organodisilazane and a cyclic organopolysilazane.
[4] The heat-curable perfluoropolyether rubber composition according to any one of [1] to [3], wherein an amount of carbon deposited on surfaces of particles of the hydrophobic silica powder of the component (D) is 0.1% to 20% by weight of a total amount of the hydrophobic silica powder.
[5] The heat-curable perfluoropolyether rubber composition according to any one of [1] to [4], further including (E) a hydrosilylation controlling agent.
[6] The heat-curable perfluoropolyether rubber composition according to any one of [1] to [5], for use in injection molding.

### ADVANTAGEOUS EFFECTS OF INVENTION

Using the heat-curable perfluoropolyether rubber composition according to the present invention, a cured product (perfluoropolyether rubber cured product) that is excellent in terms of heat resistance, chemical resistance, solvent resistance, low-temperature properties, rubber properties (e.g., mechanical strength and elongation) and the like can be formed. Moreover, a heat-curable perfluoropolyether rubber composition that is excellent in terms of injection moldability and mold releasability can be provided.

### DESCRIPTION OF EMBODIMENTS

Details of the present invention are described below.

### [Component (A)]

A component (A) is a perfluoropolyether polymer having at least two alkenyl groups in the molecular chain, represented by the general formula (1) or (2) below. The component (A) serves as a main agent (base polymer) of the heat-curable perfluoropolyether rubber composition according to the present invention,

Rf(L-MWₐ)₂ (1)

Rf(Q-(Y)_{b}-B)₂ (2)

wherein Rf represents a perfluoropolyoxyalkylene group represented by the general formula (3) below, 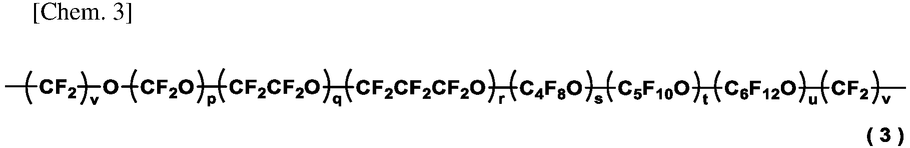
wherein p, q, r, s, t and u each independently represent an integer of 0 to 450, p + q + r + s + t + u is an integer of 20 to 450, fluorooxyalkylene units each parenthesized with p, q, r, s, t and u may be arranged in an either block or random manner, and v's each independently represent an integer of 1 to 3,
   L's each independently represent a single bond, an oxygen atom, a sulfur atom, or a divalent organic group, M's each independently represent a single bond, a nitrogen atom, a silicon atom, a carbon atom, a phosphorus atom, a group including any of the above atoms, or a divalent to octavalent organic group, W's each independently represent an alkenyl group or a monovalent organic group having an alkenyl group serving as a terminal group, a's each independently represent an integer of 1 to 7, Q's each independently represent a single bond or a divalent organic group, Y's each independently represent a divalent organic group having an alkenyl group, b's each independently represent an integer of 1 to 10, and B's each independently represent a hydrogen atom, an alkyl group having 1 to 4 carbon atoms, or a halogen atom.

In the formulae (1) and (2), Rf represents a perfluoropolyoxyalkylene group represented by general formula (3) below, 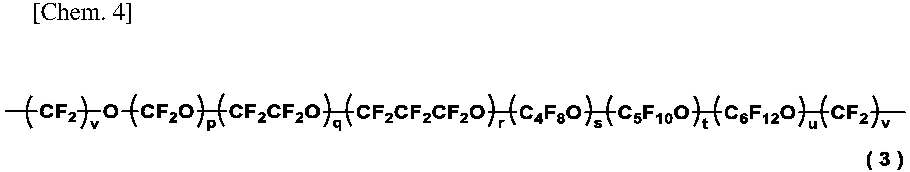 wherein p, q, r, s, t and u each independently represent an integer of 0 to 450, p + q + r + s + t + u is an integer of 20 to 450, fluorooxyalkylene units each parenthesized with p, q, r, s, t and u may be arranged in an either block or random manner, and v's each independently represent an integer of 1 to 3.

In the formula (3), p, q, r, s, t and u each independently represent an integer of 0 to 450. Preferably, p is an integer of 1 to 200, q is an integer of 1 to 200, r is an integer of 0 to 200, s is an integer of 0 to 200, t is an integer of 0 to 200, and u is an integer of 0 to 200, and p + q + r + s + t + u is an integer of 20 to 450, preferably an integer of 25 to 300.

Note that, fluorooxyalkylene units each parenthesized with s, t and u are preferably linear. That is, all of the fluorooxyalkylene units each in the perfluoropolyoxyalkylene group of the component (A) are preferably linear because, in such a case, viscosity can be reduced and, consequently, a composition having excellent injection moldability can be produced.

Further, the fluorooxyalkylene units each parenthesized with p, q, r, s, t and u may be arranged in an either block or random manner.

Also, v's each independently represent an integer of 1 to 3, preferably 1 or 2, and the alkylene group may be either linear or branched.

The perfluoropolyoxyalkylene group represented by the formula (3) is more preferably a perfluoropolyoxyalkylene group represented by the general formula (3') below.

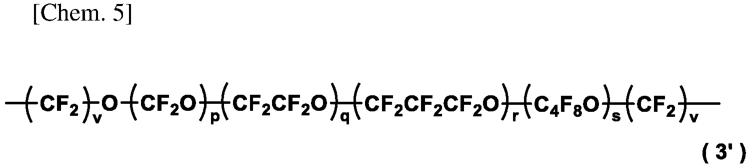

In the formula (3') above, p, q, r, s and v represent the same as in the formula (3) above. Preferably, p is an integer of 1 to 200, q is an integer of 1 to 200, r is an integer of 0 to 200, and s is an integer of 0 to 200, and p + q + r + s is an integer of 20 to 450, preferably an integer of 25 to 300, and v's each are preferably 1 or 2 (i.e., in the formula (3), t = u = 0). Note that, the fluorooxyalkylene units each parenthesized with p, q, r and s may be arranged in an either block or random manner. Further, the fluorooxyalkylene unit parenthesized with s is preferably linear.

Examples of Rf include the following groups:

[Chem. 6] **-CF₂-O-(CF₂O)ₚ₁-(CF₂CF₂O)_{q1}-CF₂**-**-CF₂-CF₂-O-(CF₂CF₂CF₂O)ᵣ₁-CF₂-** 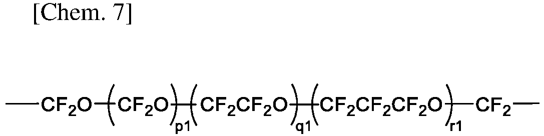 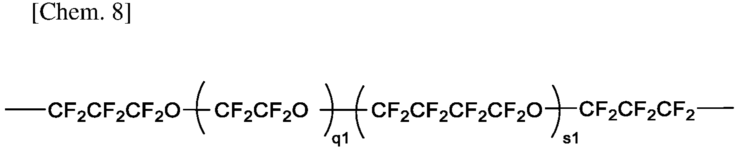 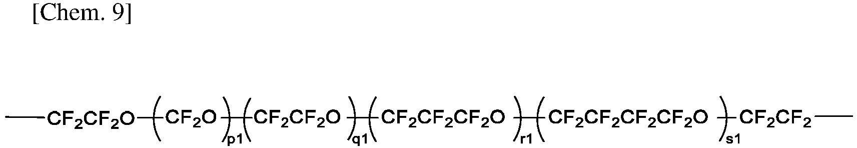 wherein p1 represents an integer of 1 to 200, q1 represents an integer of 1 to 200, r1 represents an integer of 1 to 200, and s1 represents an integer of 1 to 200; in each formula, the sum of p1, q1, r1 and s1 is an integer of 20 to 450; and the parenthesized fluorooxyalkylene units each may be arranged in an either block or random manner.

In the formula (1) above, L represents a single bond, an oxygen atom, a sulfur atom, or a divalent organic group, which serves as a linking group with which the Rf group and the M group (or the W group) are connected to each other. The divalent organic group is preferably a substituted or unsubstituted divalent organic group having 1 to 12 carbon atoms which may include one or two or more selected from the group consisting of an amide bond, an ether bond, a carbonyl bond, an ester bond, a diorganosilylene group such as a dimethylsilylene group, and a group represented by -Si[OH][(CH₂)_{c1}Si(Me)₃]-(wherein c1 represents an integer of 2 to 4, and Me represents a methyl group), and is more preferably a substituted or unsubstituted divalent hydrocarbon group having 1 to 12 carbon atoms which may include any of the above structures.

Examples of the substituted or unsubstituted divalent hydrocarbon group having 1 to 12 carbon atoms include alkylene groups, such as a methylene group, an ethylene group, a propylene group (trimethylene group or methylethylene group), a butylene group (tetramethylene group or methylpropylene group), a hexamethylene group and an octamethylene group; arylene groups, such as a phenylene group; and combinations of two or more of the above groups (e.g., an alkylene-arylene group). A group formed as a result of a part or all of the hydrogen atoms bonded to the carbon atoms included in any of the above groups being replaced with a halogen atom, such as a fluorine or iodine atom, may also be used. In particular, substituted or unsubstituted alkylene and phenylene groups having 1 to 4 carbon atoms are preferable.

Examples of the divalent organic group represented by L include groups represented by the structures below. It is preferable that, in the following structures, the left-side bond is bonded to Rf and the right-side bond is bonded to M or W.

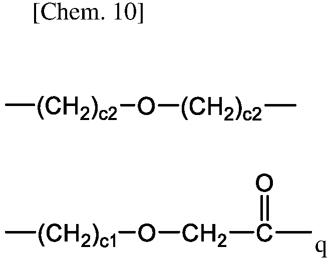

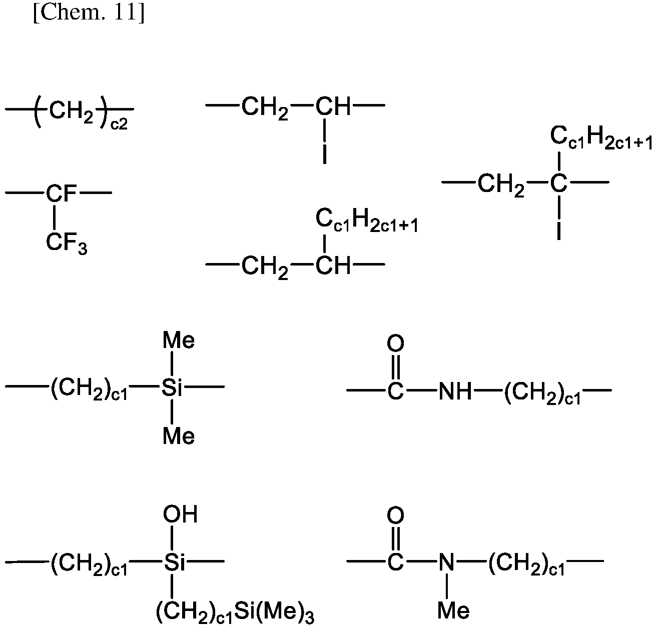

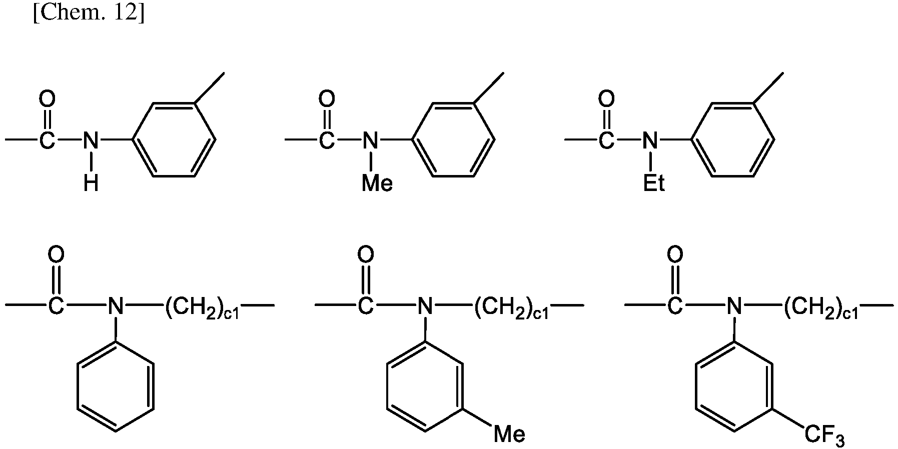

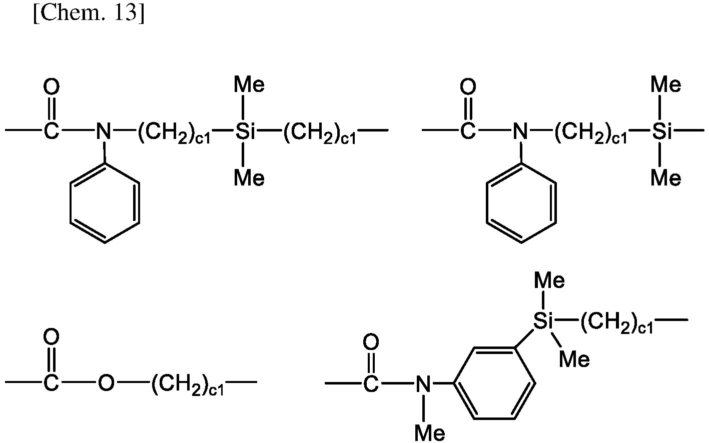

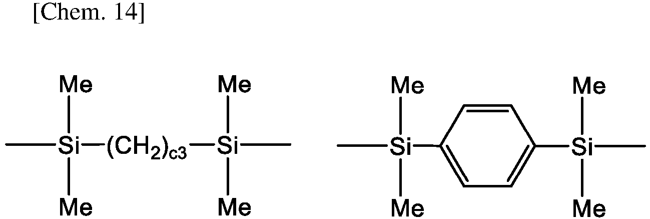

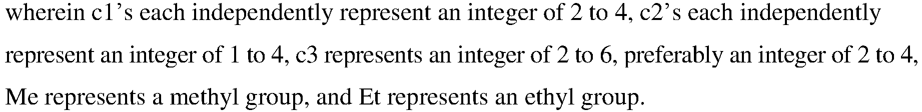

In the formula (1) above, M represents a single bond, a nitrogen atom, a silicon atom, a carbon atom, a phosphorus atom, a group including any of the above atoms, or a divalent to octavalent (the (a+1)-valent) organic group, which serves as a linking group with which the L group (or Rf group) and the W group are connected to each other. Specific examples thereof include a single bond, a divalent group represented by -R¹₂C-, a divalent group represented by -R³₂Si-, a divalent group represented by -NR⁴-, a trivalent group represented by -N=, a trivalent group represented by -CO-N=, a trivalent group represented by -P=, a trivalent group represented by -PO=, a trivalent group represented by -R¹C=, a trivalent group represented by -R³Si=, a trivalent isocyanuric group, a tetravalent group represented by -C≡, a tetravalent group represented by -O-C≡, a tetravalent group represented by -Si≡, and a divalent to octavalent siloxane residue.

In the above formulae, R¹'s each independently represent an alkyl group that preferably has 1 to 3 carbon atoms, a hydroxyl group, a group having a repeating unit that is an oxyalkylene group having 1 to 3 carbon atoms which may include a diorganosiloxane structure having 2 to 51 silicon atoms, or a silyl ether group represented by R²₃SiO-; R²'s each independently represent a hydrogen atom, an alkyl group that preferably has 1 to 3 carbon atoms, an aryl group such as a phenyl group, or an alkoxy group having 1 to 3 carbon atoms; R³'s each independently represent an alkyl group that preferably has 1 to 3 carbon atoms, an alkenyl group having 2 or 3 carbon atoms, an alkoxy group having 1 to 3 carbon atoms, or a chloro group; and R⁴ represents an alkyl group having 1 to 3 carbon atoms or an aryl group having 6 to 10 carbon atoms, such as a phenyl group.

In the case where M is a siloxane residue, it preferably has a linear, branched, or cyclic organopolysiloxane structure that has 2 to 51 silicon atoms, preferably has 2 to 13 silicon atoms, more preferably has 2 to 11 silicon atoms, and further preferably has 2 to 5 silicon atoms. The organopolysiloxane preferably has an unsubstituted or fluorine-substituted alkyl group that has 1 to 8 carbon atoms and more preferably has 1 to 4 carbon atoms, such as a methyl group, an ethyl group, a propyl group, a butyl group, or C₃F₇-C₃H₆-, or a phenyl group. It may also include a silalkylene structure consisting of two silicon atoms bonded to each other with an alkylene group, that is, Si-(CH₂)_{c3}-Si, wherein c3 represents an integer of 2 to 6, preferably an integer of 2 to 4.

Examples of M include the following structures. Note that in the following structures, it is preferable that in the trivalent group represented by -CO-N=, the carbon atom is bonded to L or Rf and the nitrogen atom is bonded to W. 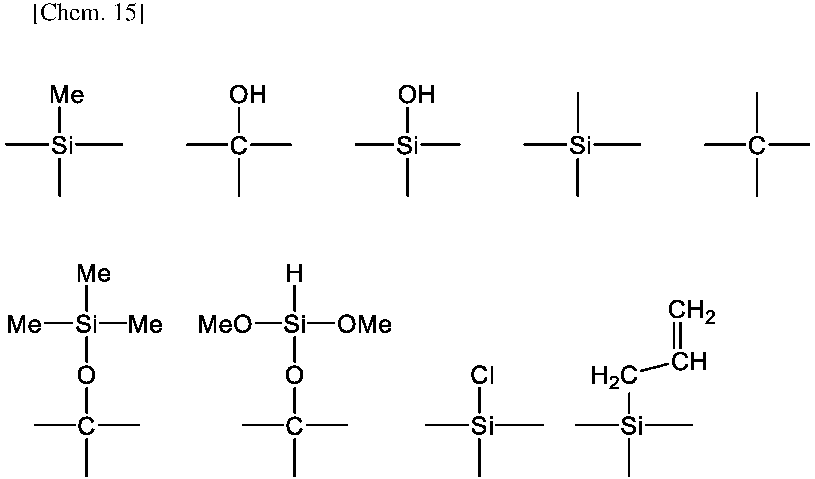 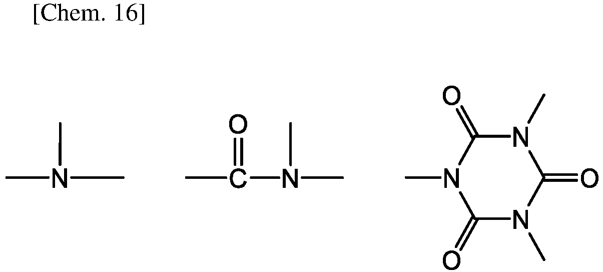 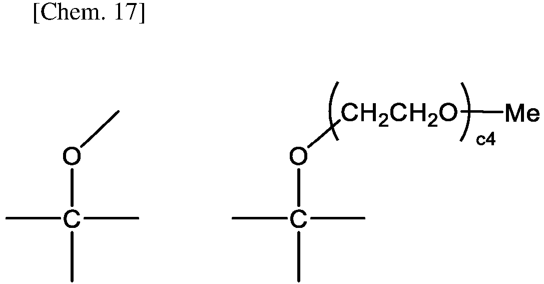 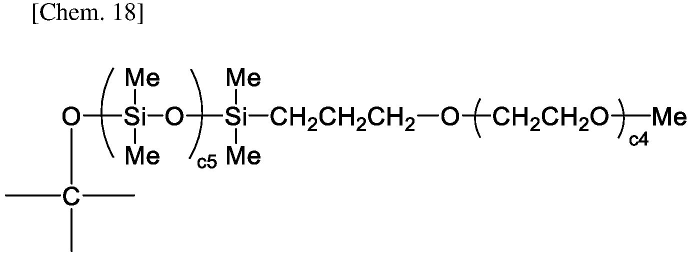 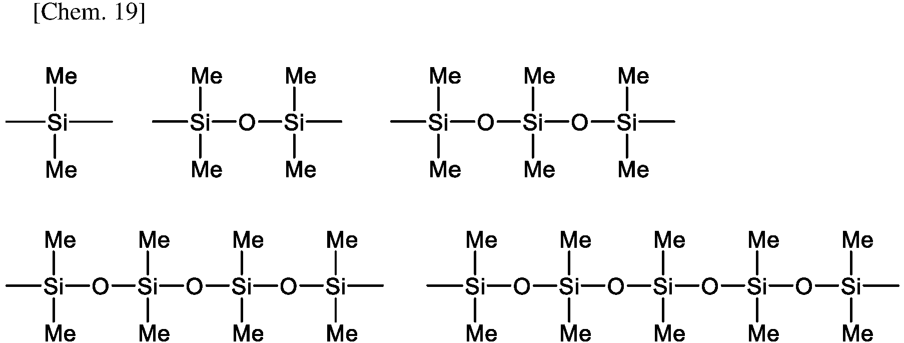 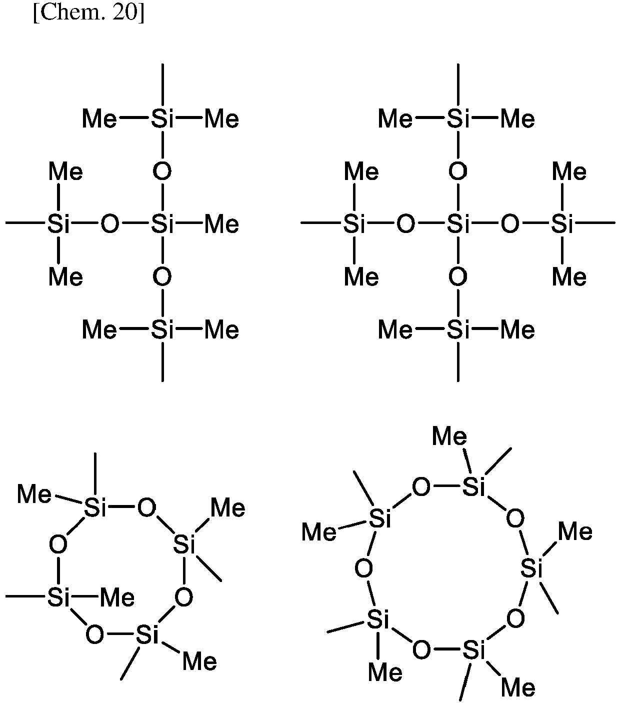 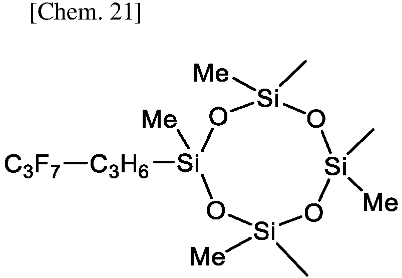 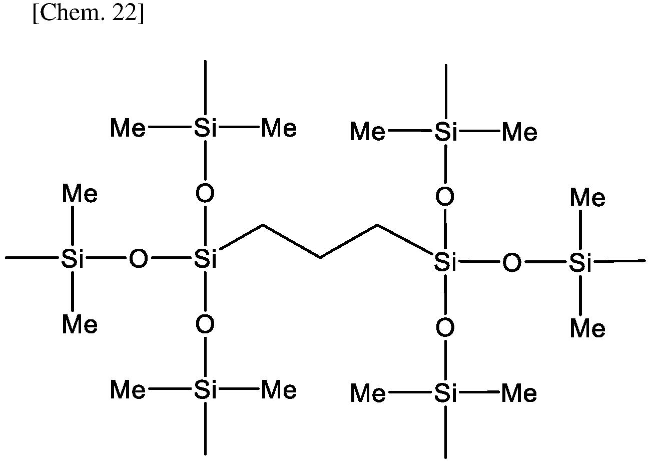 wherein c4 represents an integer of 1 to 20, c5 represents an integer of 1 to 50, and Me represents a methyl group.

In the formula (1) above, W represents an alkenyl group or a monovalent organic group having an alkenyl group that serves as a terminal group and is preferably an alkenyl group or a group represented by the following formula. 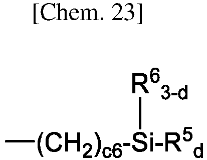 wherein R⁵ represents an alkenyl group, R⁶ represents an alkyl group having 1 to 4 carbon atoms or a phenyl group, c6 represents an integer of 0 to 10, and d represents an integer of 1 to 3.

The alkenyl group represented by W and the alkenyl group represented by R⁵ of the above formula are preferably alkenyl groups that have 2 to 10 carbon atoms and preferably have 2 to 5 carbon atoms, such as a vinyl group, an allyl group, a propenyl group, a butenyl group, a pentenyl group and a hexenyl group. Among these, the alkenyl group represented by W is preferably a vinyl group, a butenyl group, or a pentenyl group, and the alkenyl group represented by R⁵ is preferably a vinyl group or an allyl group.

R⁶ represents an alkyl group having 1 to 4 carbon atoms, such as a methyl group or an ethyl group, or a phenyl group, preferably a methyl group.

c6 represents an integer of 0 to 10, preferably an integer of 0 to 3. d is an integer of 1 to 3, preferably 1.

Examples of W include the following structures.

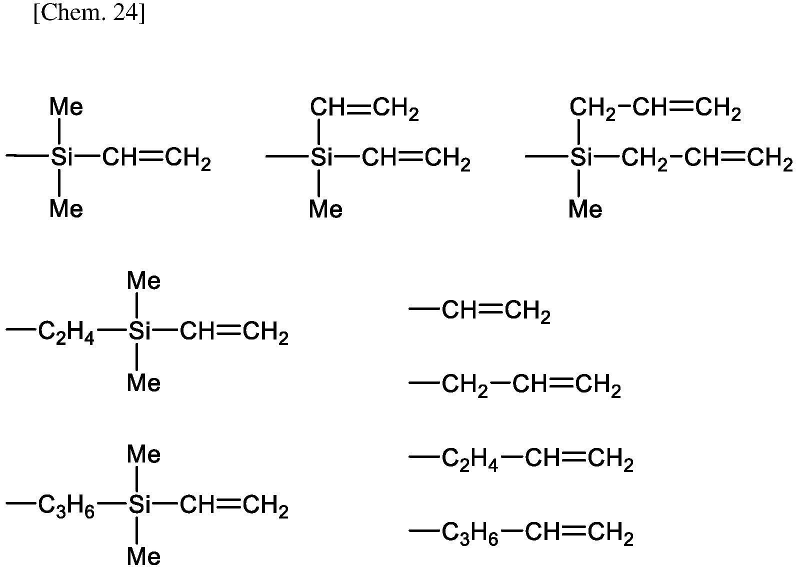

In the formula (1), a represents an integer of 1 to 7, preferably an integer of 1 to 3.

Examples of the structure represented by - MWₐ in the formula (1) include the following structures. 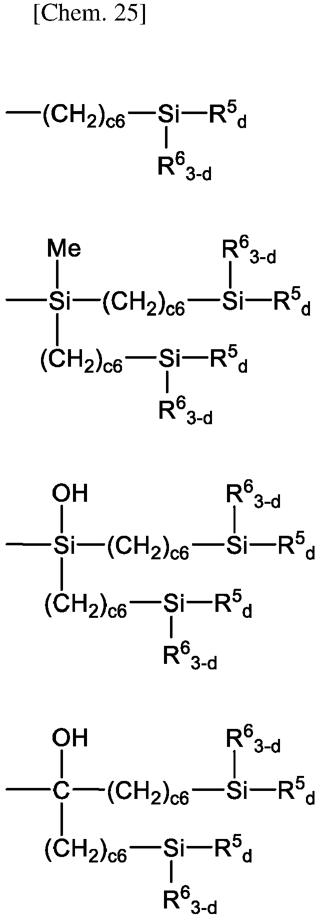 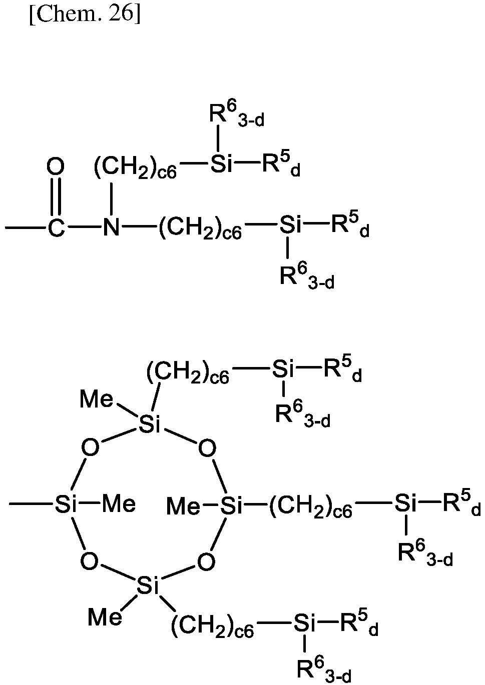 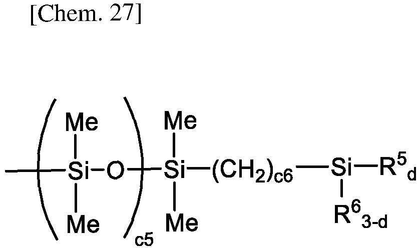 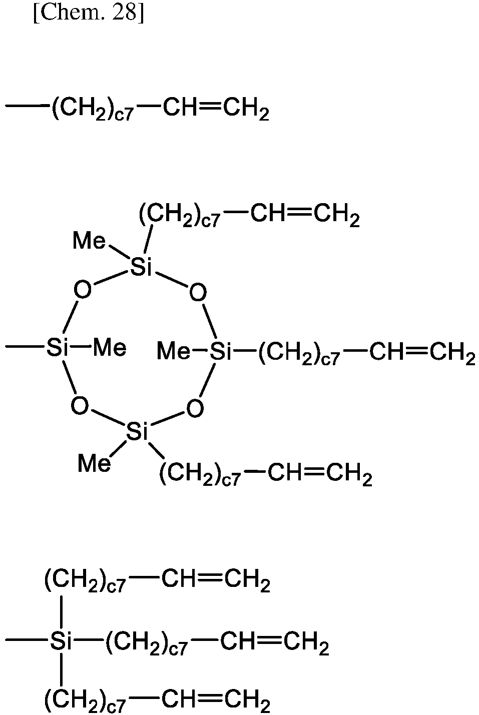 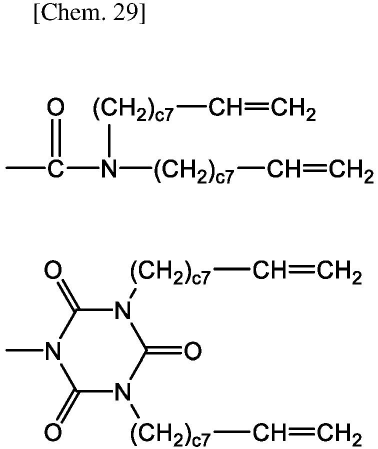 wherein R⁵, R⁶, c5, c6 and d are described as above; c7 represents an integer of 0 to 8, preferably an integer of 0 to 3; and Me represents a methyl group.

In the formula (2) above, Q represents a single bond or a divalent organic group, which serves as a linking group with which the Rf group and the Y group are connected to each other. The divalent organic group represented by Q is preferably a substituted or unsubstituted divalent organic group having 1 to 12 carbon atoms which may include one or two or more selected from the group consisting of an amide bond, an ether bond, an ester bond, a diorganosilylene group, such as a dimethylsilylene group, and a group represented by -Si[OH][(CH₂)_{c1}Si(Me)₃]- (wherein c1 represents an integer of 2 to 4 and Me represents a methyl group) and is more preferably a substituted or unsubstituted divalent hydrocarbon group having 1 to 12 carbon atoms which may include any of the above structures.

Examples of the substituted or unsubstituted divalent hydrocarbon group having 1 to 12 carbon atoms include those of the substituted or unsubstituted divalent hydrocarbon group having 1 to 12 carbon atoms represented by L described above.

Examples of the divalent organic group represented by Q include groups represented by the structures below. It is preferable that, in the following structures, the left-side bond is bonded to Rf and the right-side bond is bonded to Y.

[Chem. 30] -(CH₂)_{c2}-O-(CH₂)_{c2}-

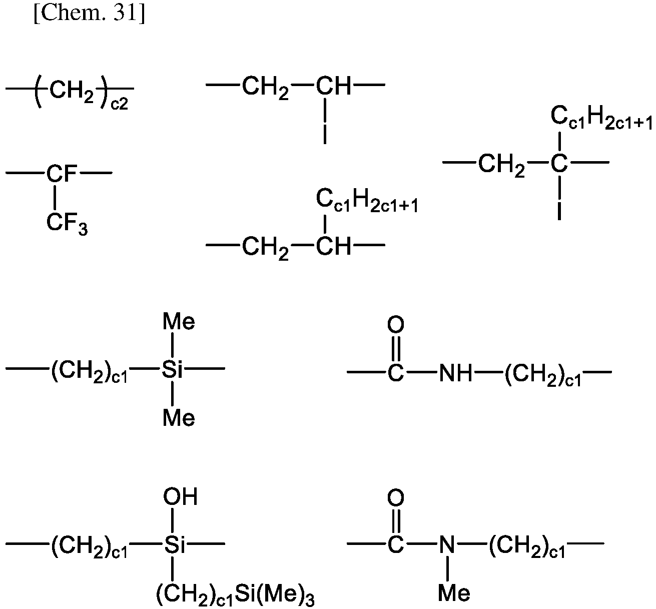

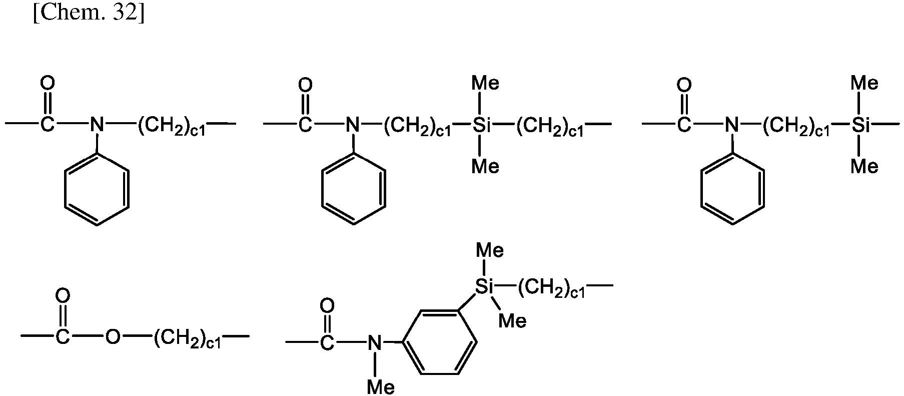

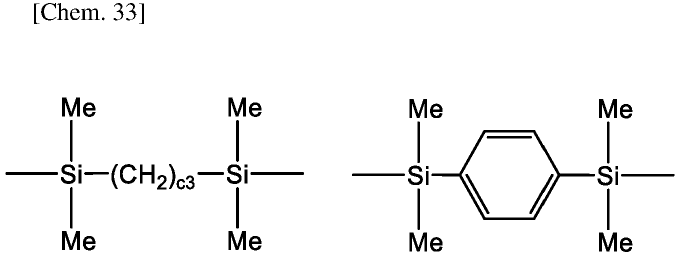

wherein c1, c2 and c3 represent the same as described above, and Me represents a methyl group.

In the formula (2) above, Y represents a divalent organic group having an alkenyl group, preferably a group having a structure represented by any of the following formulae. 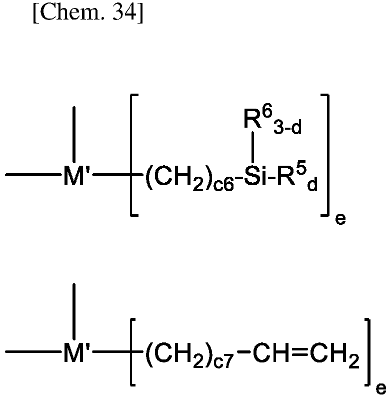 wherein R⁵, R⁶, c6, c7 and d represent the same as described above; e represents an integer of 1 to 6, preferably 1 or 2; and M' represents a substituted or unsubstituted trivalent to octavalent (preferably trivalent or tetravalent) hydrocarbon group, a part or all of the carbon atoms included in the hydrocarbon group may be replaced with silicon atoms, and a part or all of the hydrogen atoms bonded to the above carbon atoms may be replaced with halogen atoms, such as fluorine atoms.

M' is preferably any of the groups represented by the structures below. 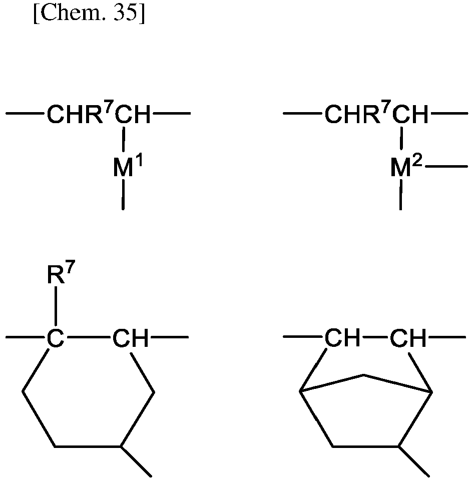 wherein M¹ represents a single bond, a substituted or unsubstituted divalent hydrocarbon group having 1 to 6 carbon atoms or a diorganosilylene group, such as a dimethylsilylene group; M² represents a trivalent group represented by -R¹C= or a trivalent group represented by -R³Si=, wherein R¹ and R³ represent the same as described above; and R⁷ represents a hydrogen atom or a monovalent hydrocarbon group, such as an alkyl group having 1 to 6 carbon atoms, e.g., a methyl group, an ethyl group, or a propyl group.

Examples of M¹ include a single bond, a phenylene group, a dimethylsilylene group and a tetrafluoroethylene group. Examples of M² include the following. 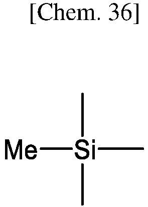 wherein Me represents a methyl group.

Examples of Y include the following groups. It is preferable that these groups each are arranged such that the left-side portion of the group is bonded to Q or Rf and the right-side portion of the group is bonded to B. 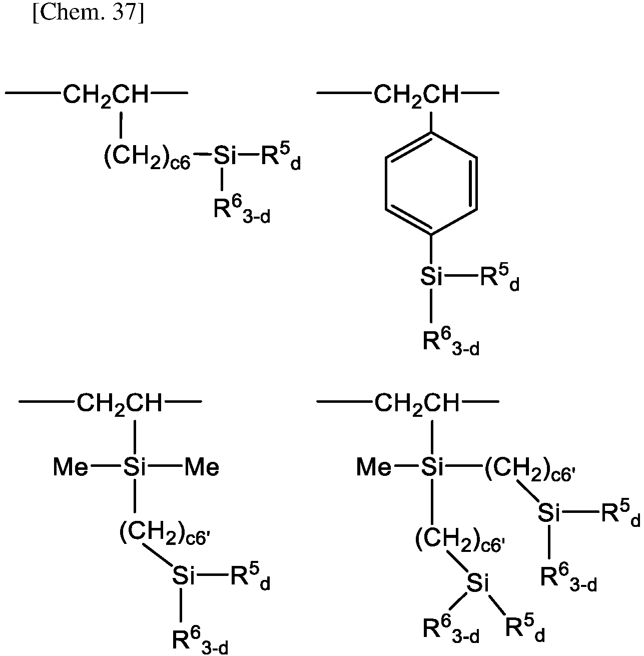 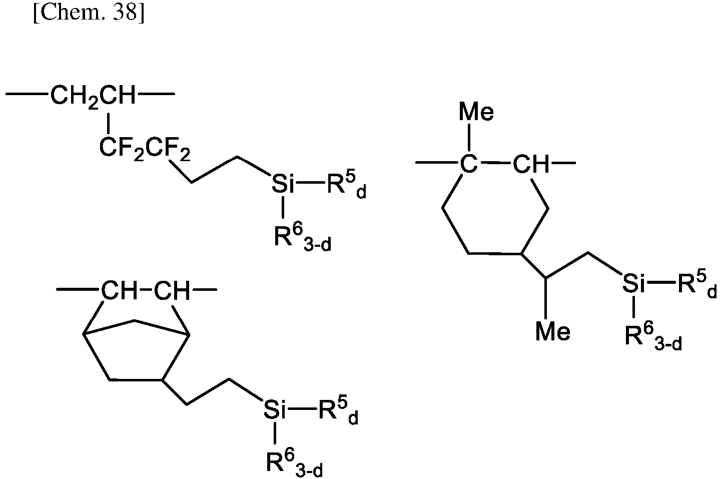 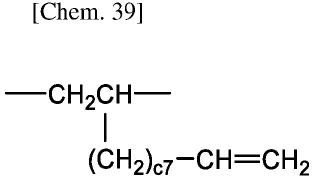 wherein R⁵, R⁶, c6, c7 and d represent the same as described above; c6' represents an integer of 2 to 10, preferably 2 or 3; and Me represents a methyl group.

In the formula (2) above, b's each independently represent an integer of 1 to 10, preferably an integer of 1 to 4.

B represents a hydrogen atom; an alkyl group having 1 to 4 carbon atoms, such as a methyl group, an ethyl group, a propyl group or a butyl group; or a halogen atom, such as a fluorine atom, a chlorine atom, a bromine atom, or an iodine atom.

Examples of the alkenyl group-containing perfluoropolyether polymer represented by the formula (1) or (2) above include the following structures. Note that, in the following formulae, Me represents a methyl group.

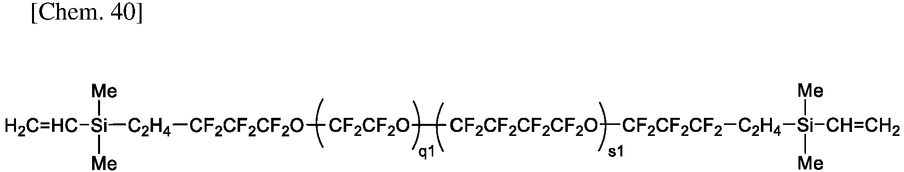

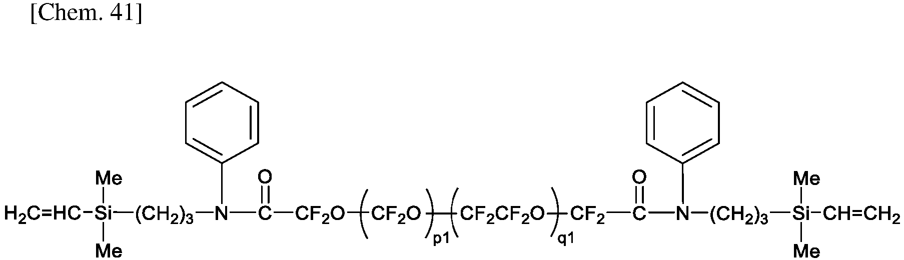

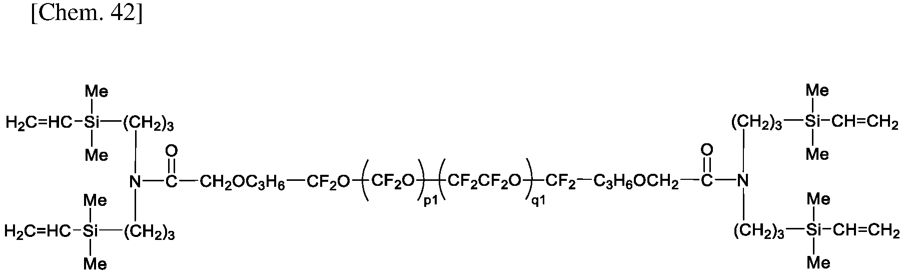

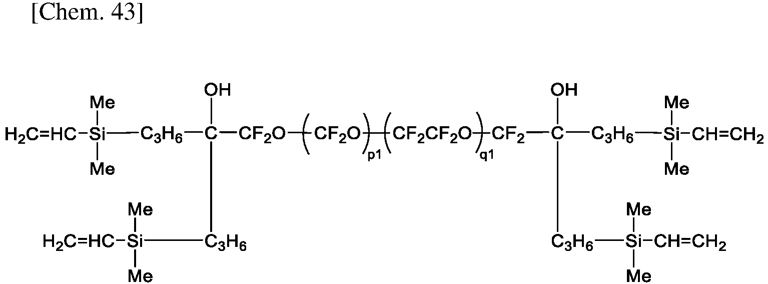

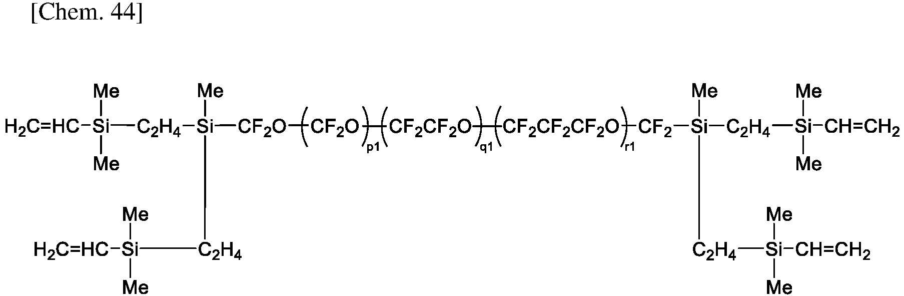

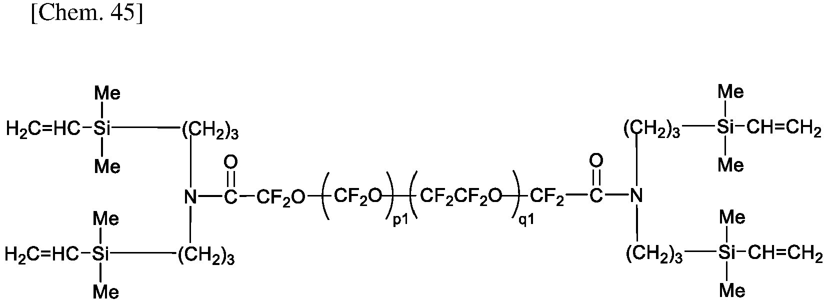

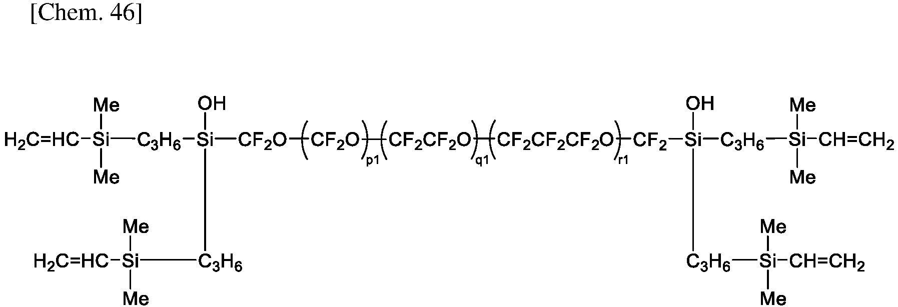

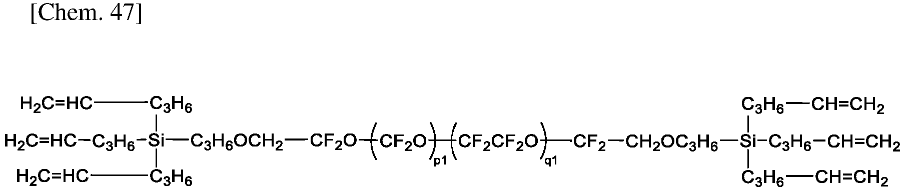

[Chem. 48] **H₂C=CH-CH₂-O-CH₂-CF₂-O-(CF₂O)ₚ₂-(CF₂CF₂O)_{q2}-CF₂-CH₂-O-CH₂-CH=CH₂**

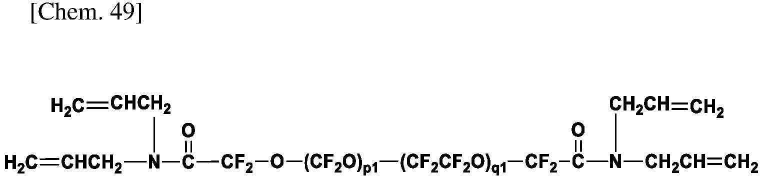

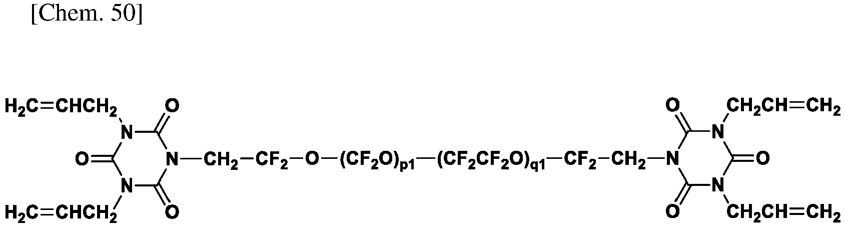

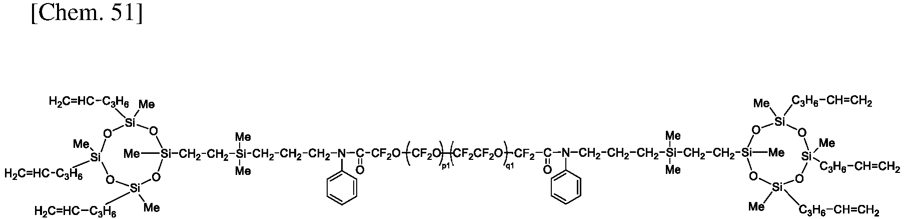

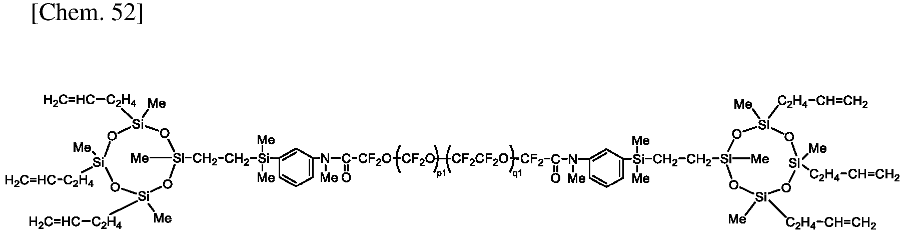

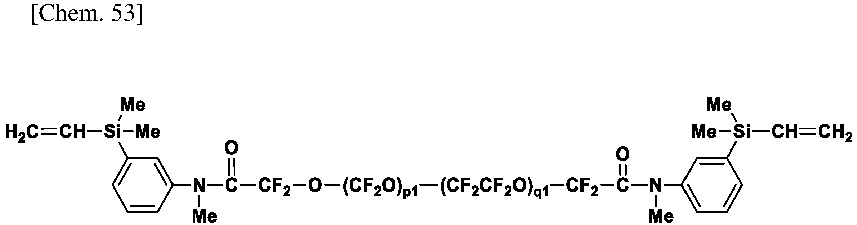

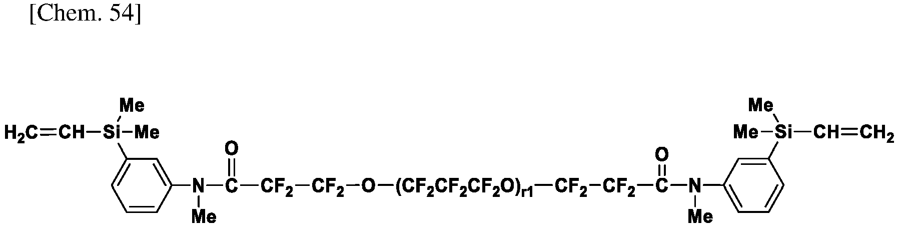

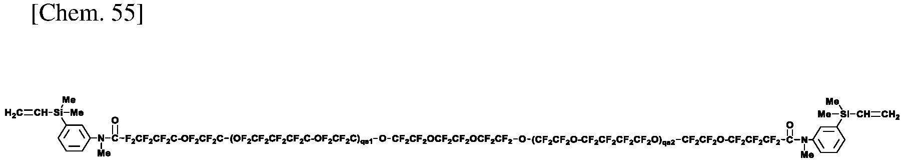

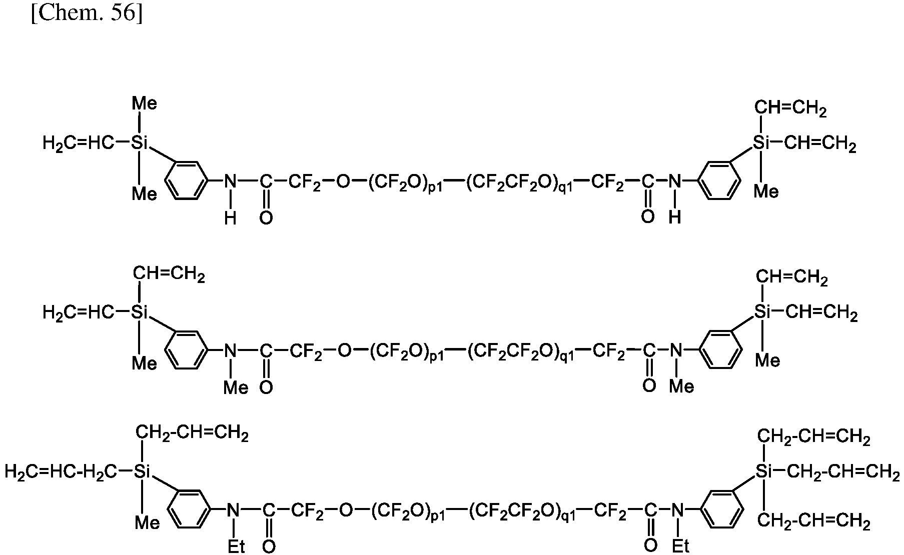

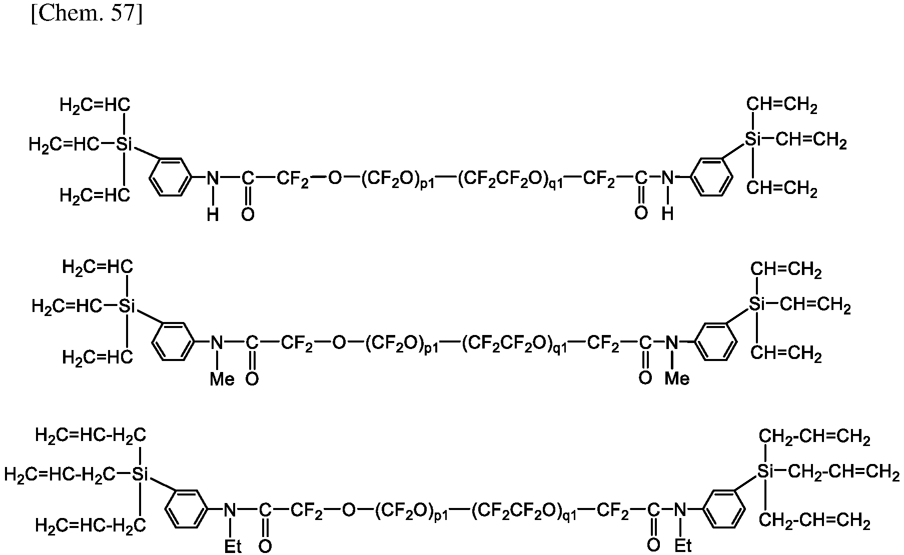

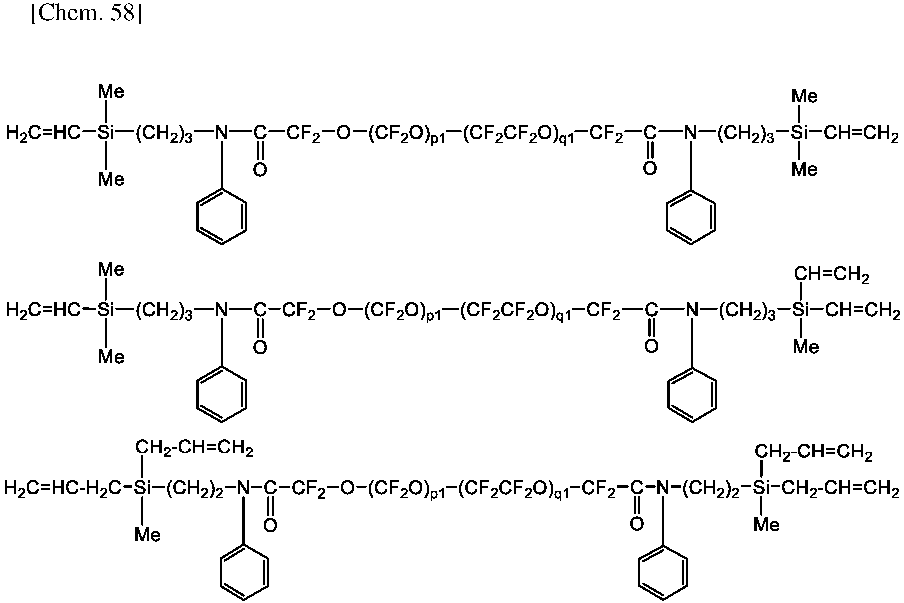

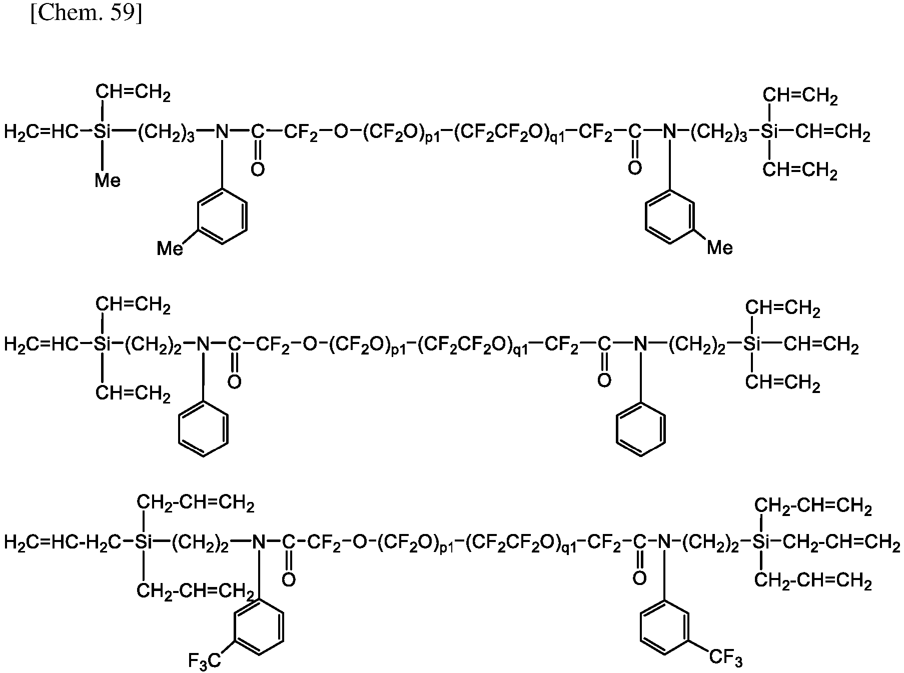

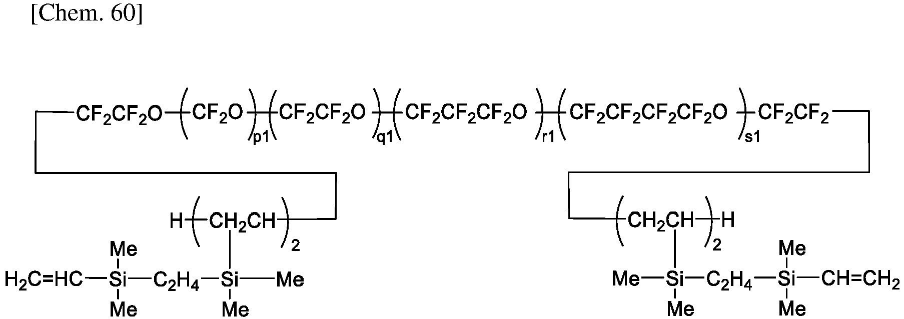

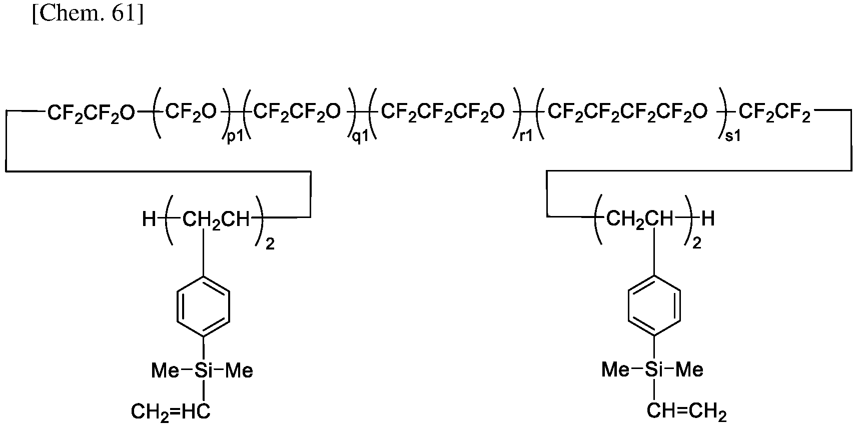

wherein p1, q1, r1, s1, and the sum of p1, q1, r1 and s1 in each formula are described as above; qs1 represents an integer of 0 to 222, qs2 represents an integer of 0 to 222, and the sum of qs1 and qs2 is an integer of 8 to 222; and the parenthesized fluorooxyalkylene units may be arranged in an either block or random manner.

The component (A) has at least two, preferably, two to six alkenyl groups in the molecular chain, and an amount of the alkenyl groups is preferably 0.005 to 0.3 mol/100 g, further preferably 0.007 to 0.2 mol/100 g. Note that, in the present invention, the amount of the alkenyl groups is determined by ¹H-NMR.

The perfluoropolyether polymers of the component (A) may be used alone or in combination of two or more.

### [Component (B)]

The component (B) is a fluorine-containing organohydrogen polysiloxane having two or more silicon-bonded hydrogen atoms per molecule and is preferably a fluorine-containing organohydrogen polysiloxane that has a perfluoroalkyl or perfluorooxyalkyl group in the molecule or that has a perfluoroalkylene or perfluorooxyalkylene group, further has two or more hydrogen atoms (SiH groups) directly bonded to silicon atoms, and does not have an alkoxy group directly bonded to an epoxy group or a silicon atom in the molecule. The component (B) serves as a crosslinking agent for the component (A).

The perfluoroalkyl group, the perfluorooxyalkyl group, the perfluoroalkylene group and the perfluorooxyalkylene group are groups introduced with consideration of, for example, compatibility with the component (A), dispersibility, and post-curing uniformity.

Examples of the perfluoroalkyl or perfluorooxyalkyl group include the groups represented by the general formulae (4), (5) and (6) below.

C_{f}F_{2f+1}- (4)

in the formula (4), f represents an integer of 1 to 10, preferably an integer of 3 to 7.

CF₃O-(CF₂CF₂O)ₖ(CF₂O)₁-CF₂- (5)

in the formula (5), k and l each independently represent an integer of 1 to 50, preferably an integer of 1 to 30; the average of k + l is 2 to 100, preferably 2 to 60; and the repeating units each may be bonded to one another in a random manner. 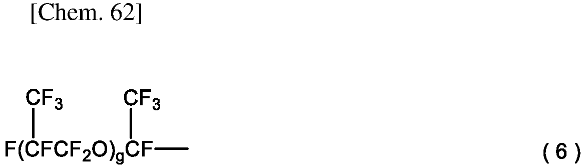 in the formula (6), g represents an integer of 1 to 50, preferably an integer of 2 to 30.

Examples of the perfluoroalkylene or perfluorooxyalkylene group include the groups represented by the general formulae (7) to (9) below.

-CₕF₂ₕ- (7)

in the formula (7), h represents an integer of 1 to 20, preferably an integer of 2 to 10. 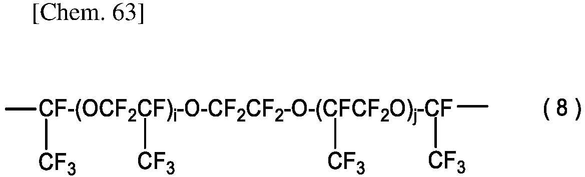 in the formula (8), i and j each represent an integer of 1 or more, preferably an integer of 1 to 100; and the average of i + j is 2 to 200, preferably 2 to 100.

-CF₂O-(CF₂CF₂O)ₖ(CF₂O)₁-CF₂- (9)

in the formula (9), k and l each represent an integer of 1 to 50, preferably an integer of 1 to 30; the average of k + l is 2 to 100, preferably 2 to 60; and the repeating units each may be bonded to one another in a random manner.

It is preferable that those perfluoroalkyl, perfluorooxyalkyl, perfluoroalkylene, or perfluorooxyalkylene group and a silicon atom constituting a polysiloxane are connected to each other with a divalent linking group. The divalent linking group is preferably a substituted or unsubstituted divalent hydrocarbon group having 2 to 13 carbon atoms, particularly preferably 2 to 8 carbon atoms, which may have an oxygen, nitrogen, or silicon atom. Specific examples thereof include an alkylene group, an arylene group, a combination thereof, and a group formed as a result of any of the above groups being combined with one or two or more structures or the like selected from the group consisting of an ether bond oxygen atom, an amide bond, a carbonyl bond, an ester bond, and a diorganosilylene group, such as a dimethylsilylene group. Examples thereof include the following structures having 2 to 13 carbon atoms:

-CH₂CH₂-,

-CH₂CH₂CH₂-,

-CH₂CH₂CH₂OCH₂-,

-CH₂CH₂CH₂-NH-CO-,

-CH₂CH₂CH₂-N(Ph)-CO-,

-CH₂CH₂CH₂-N(Me)-CO-,

-CH₂CH₂CH₂-N(Et)-CO-,

-CH₂CH₂CH₂-N(iPr)-CO-,

-CH₂CH₂CH₂-O-CO-,

-CH₂CH₂-Si(Me)₂-Ph'-N(Me)-CO-,

-CH₂CH₂CH₂-Si(Me)₂-Ph'-N(Me)-CO-

wherein Me represents a methyl group, Et represents an ethyl group, iPr represents an isopropyl group, Ph represents a phenyl group, and Ph' represents a phenylene group.

In the example structures described above, it is preferable that the left-side bond is bonded to a silicon atom constituting a polysiloxane and the right-side bond is bonded to a perfluoroalkyl, perfluorooxyalkyl, perfluoroalkylene, or perfluorooxyalkylene group.

The silicon-bonded monovalent substituent group included in the fluorine-containing organohydrogen polysiloxane of a component (B) which is other than the monovalent or divalent fluorine-containing organic group describe above or a hydrogen atom directly bonded to a silicon atom is a substituted or unsubstituted alkyl group having 1 to 20 carbon atoms, preferably 1 to 12 carbon atoms or aryl group having 6 to 20, preferably 6 to 12 carbon atoms. Examples thereof include alkyl groups, such as a methyl group, an ethyl group, a propyl group, a butyl group, a hexyl group, a cyclohexyl group, an octyl group and a decyl group; an aryl groups, such as a phenyl group, a tolyl group and a naphthyl group; and a group formed as a result of a part or all the hydrogen atoms included in any of the above groups being replaced with, a halogen atom, such as a chlorine atom, or a cyano group, for example, a chloromethyl group, a chloropropyl group, or a cyanoethyl group. Among these, a methyl group is preferable. Note that it does not have an epoxy group or an alkoxy group.

The structure of the fluorine-containing organohydrogen polysiloxane of a component (B) may be any of a cyclic structure, a chain structure, a three-dimensional network structure, and a combination of any of the above structures. The number of the silicon atoms included in the fluorine-containing organohydrogen polysiloxane is not particularly limited, but commonly 2 to 60, preferably 3 to 30, more preferably about 4 to 30.

Moreover, the component (B) has two or more, preferably three or more, SiH groups per molecule. The amount of the SiH groups is preferably 0.0001 to 0.02 mol/g, further preferably 0.0002 to 0.01 mol/g. Note that, in the present invention, the content of SiH groups is determined by ¹H-NMR.

Examples of the component (B) include the compounds represented by the general formulae (10) to (16) below. 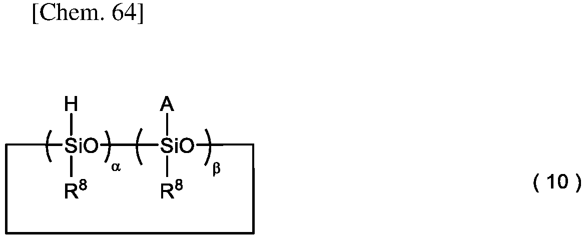 in the formula (10), A's each independently represent the above-described perfluoroalkyl or perfluorooxyalkyl group bonded to a silicon atom constituting a siloxane with a divalent hydrocarbon group that may have an oxygen, nitrogen, or silicon atom, and examples of the perfluoroalkyl or perfluorooxyalkyl group include the groups represented by the general formulae (4) to (6) above; R⁸'s each independently represent the substituted or unsubstituted alkyl group having 1 to 20 carbon atoms, preferably 1 to 12 carbon atoms or the aryl group having 6 to 20, preferably 6 to 12 carbon atoms, which is described above; α represents an integer of 2 to 6, preferably an integer of 3 to 6; β represents an integer of 1 to 4, preferably an integer of 1 to 3; α + β is an integer of 4 to 10, preferably an integer of 4 to 9; and the order in which -(Si(H)(R⁸)O)- groups and -(Si(A)(R⁸)O)- groups are bonded to one another is not limited. 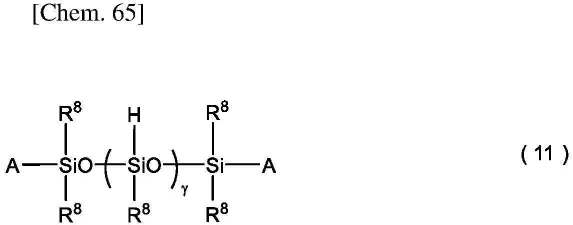 in the formula (11), A's each independently represent the same as A above; R⁸'s each independently represent the same as R⁸ above; and γ represents an integer of 2 to 50, preferably an integer of 3 to 30. 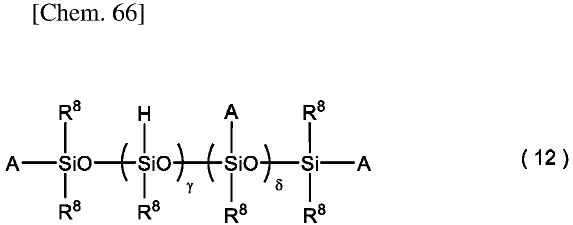 in the formula (12), A's each independently represent the same as A above; R⁸'s each independently represent the same as R⁸ above; γ represents an integer of 2 to 50, preferably an integer of 3 to 30; δ represents an integer of 1 to 40, preferably an integer of 1 to 20; γ + δ is an integer of 4 to 60, preferably an integer of 4 to 50; and the order in which -(Si(H)(R⁸)O)- groups and -(Si(A)(R⁸)O)- groups are bonded to one another is not limited. 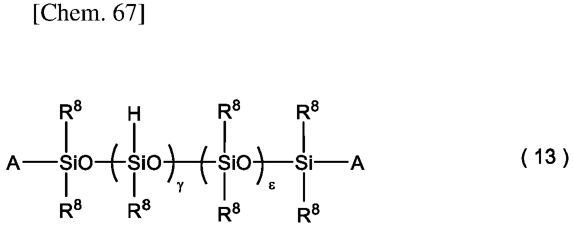 in the formula (13), A's each independently represent the same as A above; R⁸'s each independently represent the same as R⁸ above; γ represents an integer of 2 to 50, preferably an integer of 3 to 30; ε represents an integer of 1 to 40, preferably an integer of 1 to 20; γ + ε is an integer of 4 to 60, preferably an integer of 4 to 50; and the order in which -(Si(H)(R⁸)O)- groups and -(Si(R⁸)₂O)- groups are bonded to one another is not limited. 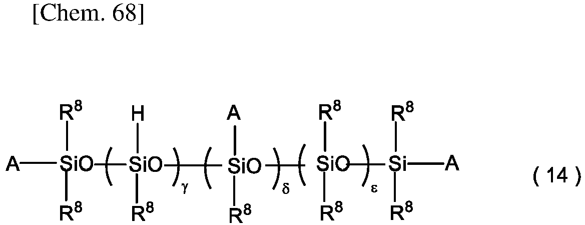 in the formula (14), A's each independently represent the same as A above; R⁸'s each independently represent the same as R⁸ above; γ represents an integer of 2 to 50, preferably an integer of 3 to 30; δ represents an integer of 1 to 40, preferably an integer of 1 to 20; ε represents an integer of 1 to 40, preferably an integer of 1 to 20; γ + δ + ε is an integer of 5 to 60, preferably an integer of 5 to 50; and the order in which -(Si(H)(R⁸)O)-groups, -(Si(A)(R⁸)O)- groups, and -(Si(R⁸)₂O)- groups are bonded to one another is not limited. 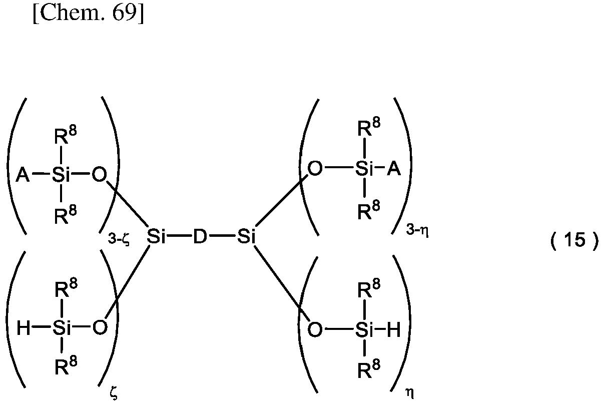 in the formula (15), D represents an oxygen atom, an alkylene group, or a perfluoroalkylene or perfluorooxyalkylene group bonded to adjacent silicon atoms with a divalent hydrocarbon group that may have an oxygen or nitrogen atom; examples of the perfluoroalkylene or perfluorooxyalkylene group include the groups represented by the general formulae (7) to (9) above; A's each independently represent the same as A above; R⁸'s each independently represent the same as R⁸ above; ζ represents an integer of 0 to 3, η represents an integer of 0 to 3 , ζ + η is an integer of 2 to 6, preferably an integer of 3 to 5; and the formula (15) has at least one group selected from a perfluoroalkyl group, a perfluorooxyalkyl group, a perfluoroalkylene group and a perfluorooxyalkylene group. 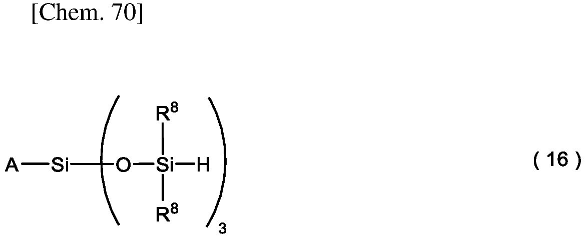 in the formula (16), A's each independently represent the same as A above; and R⁸'s each independently represent the same as R⁸ above.

Specific examples of the component (B) include the following compounds. These compounds may be used alone or in combination of two or more. In formulae below, Me represents a methyl group, Ph represents a phenyl group, and the siloxane units may be arranged in a random manner. 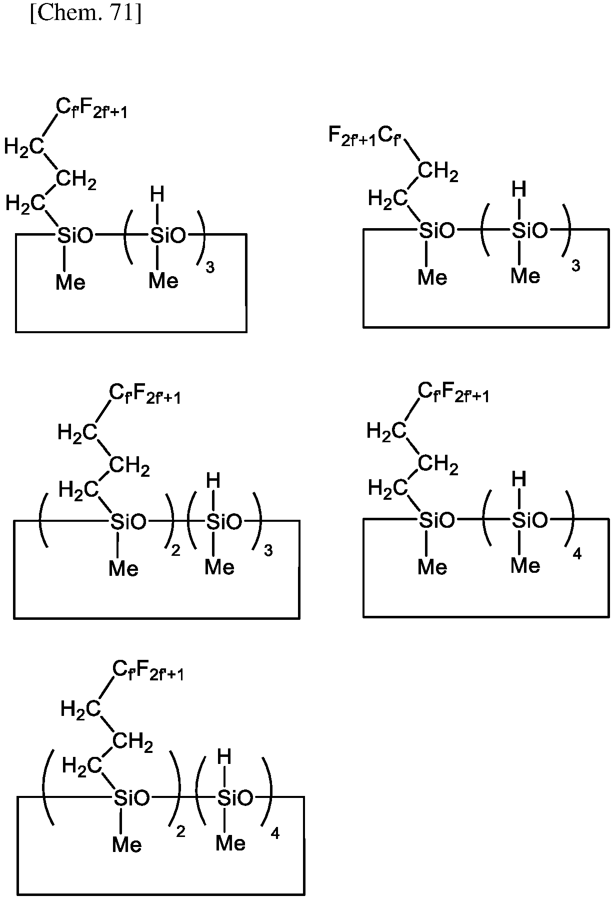 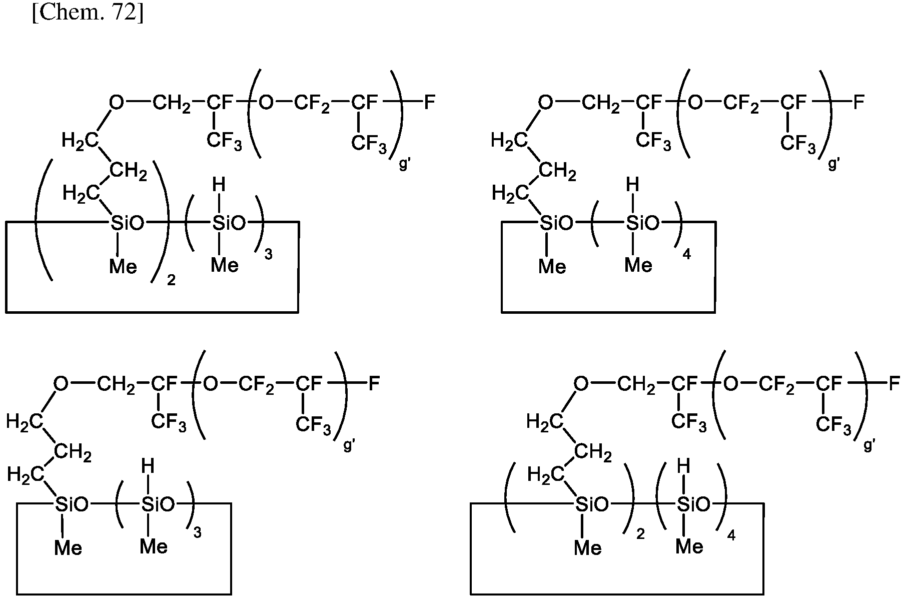 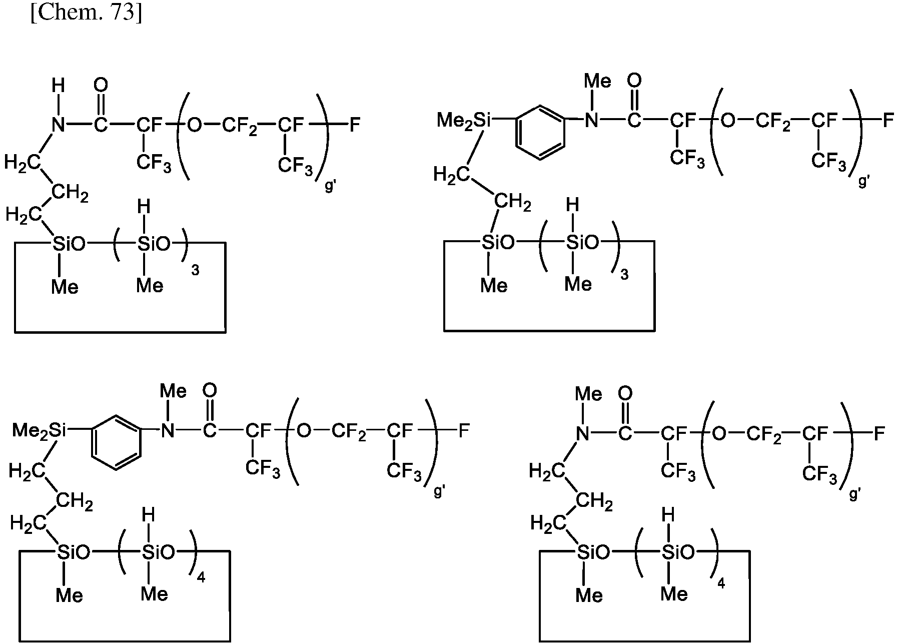 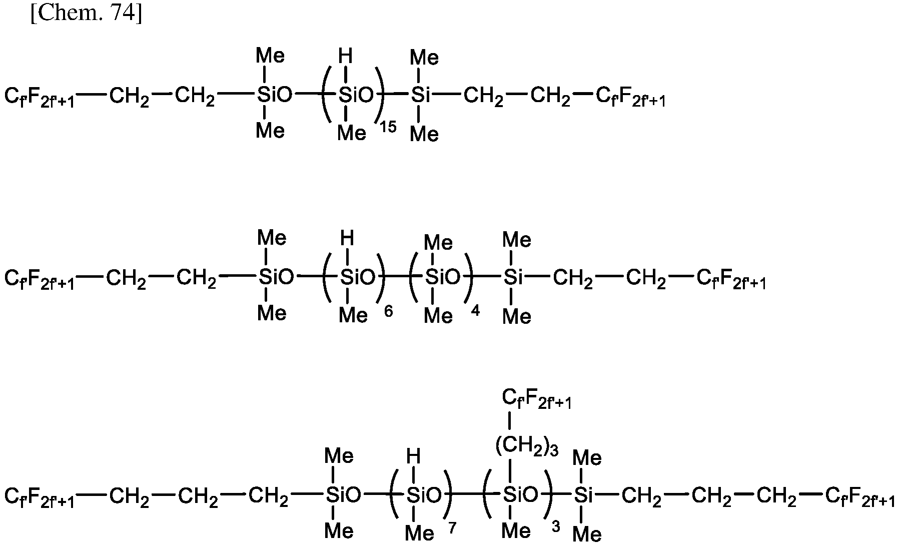 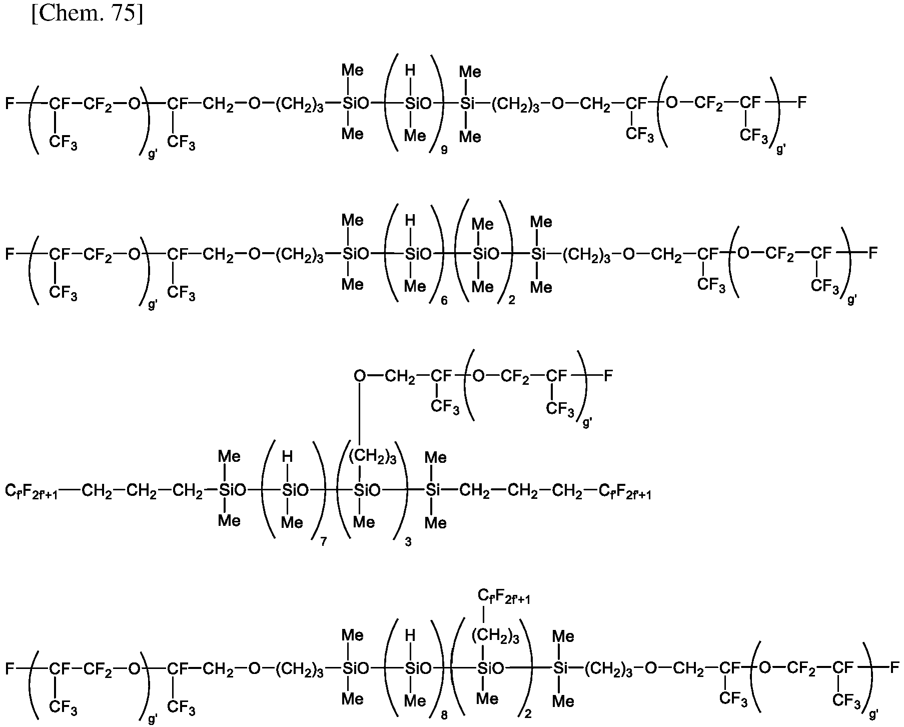 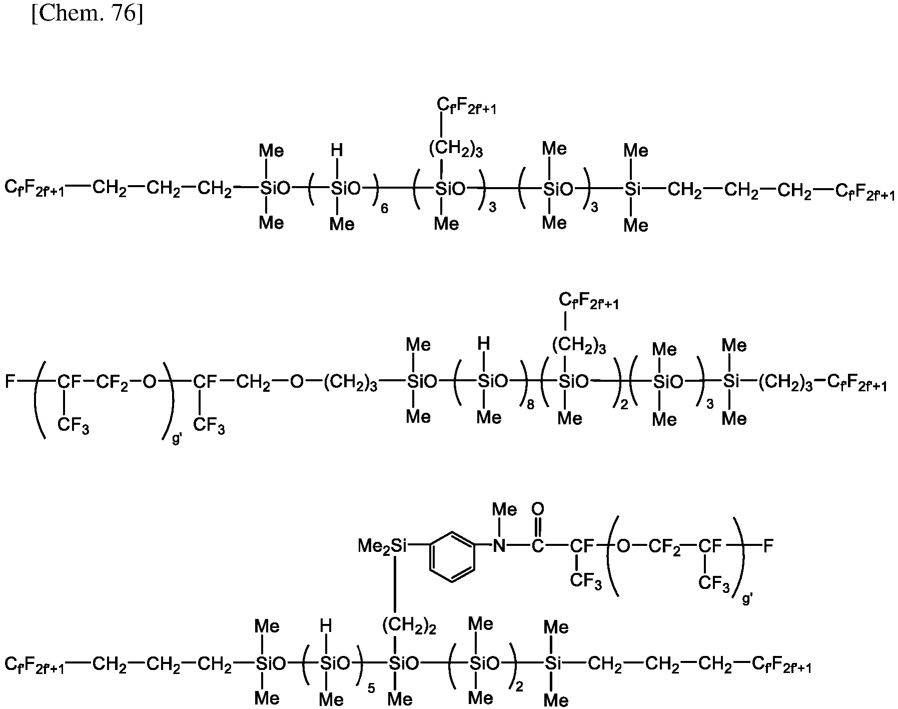 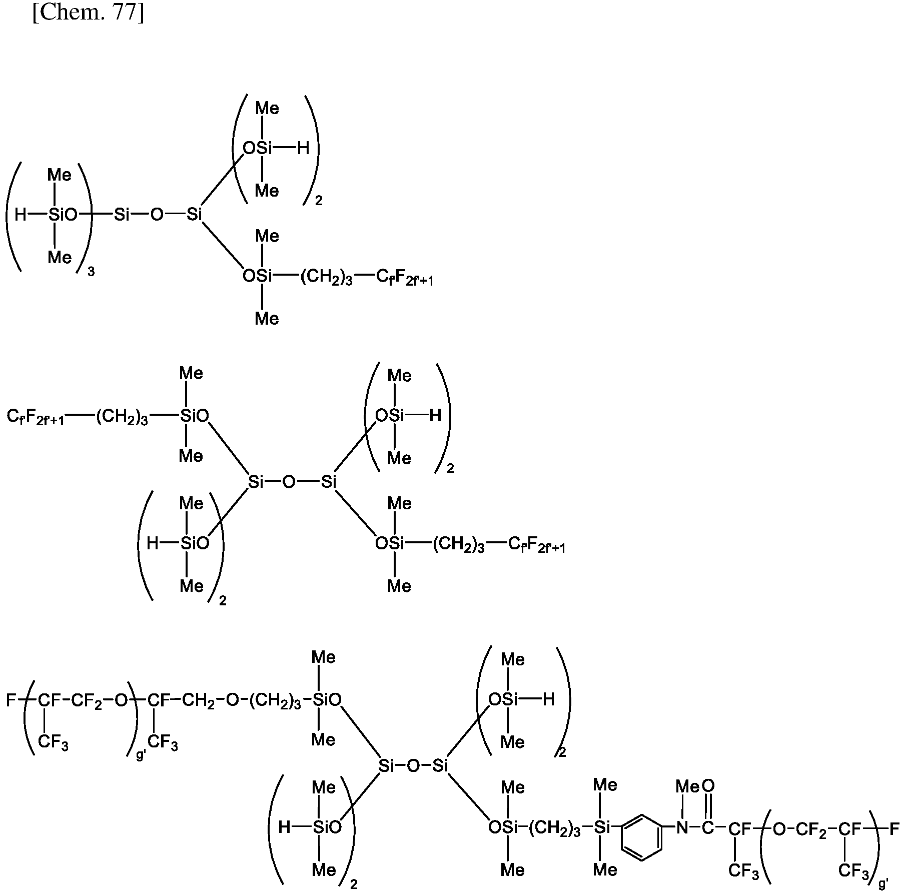 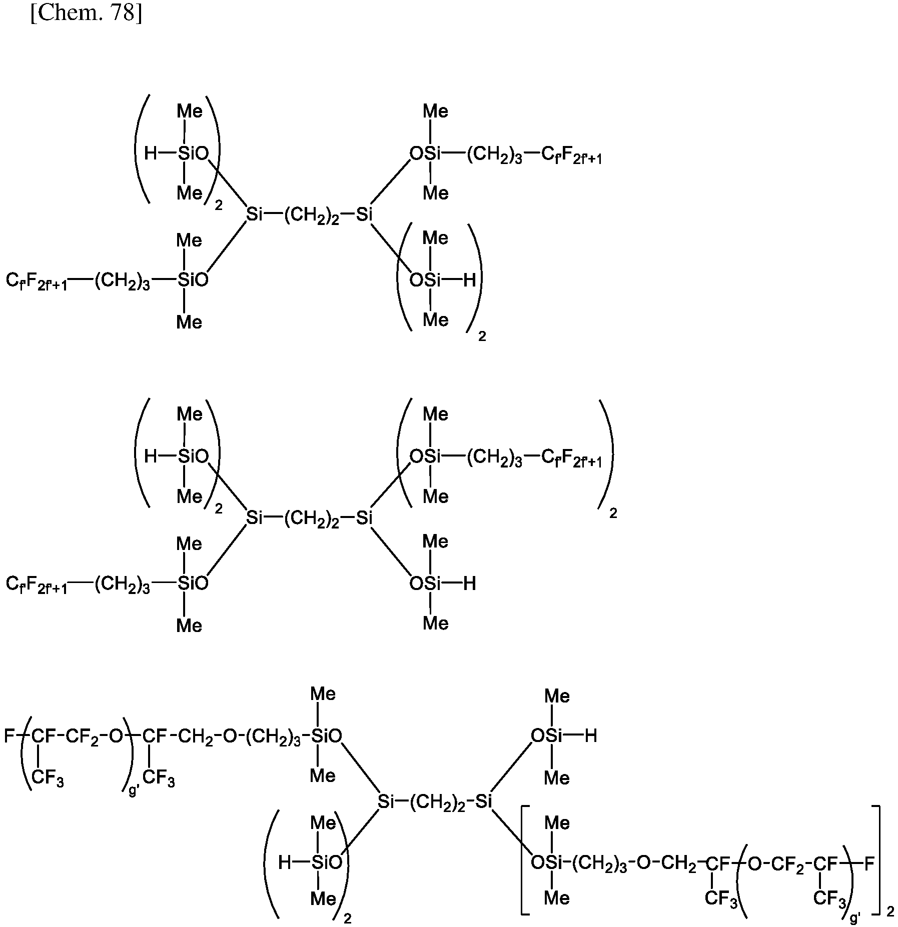 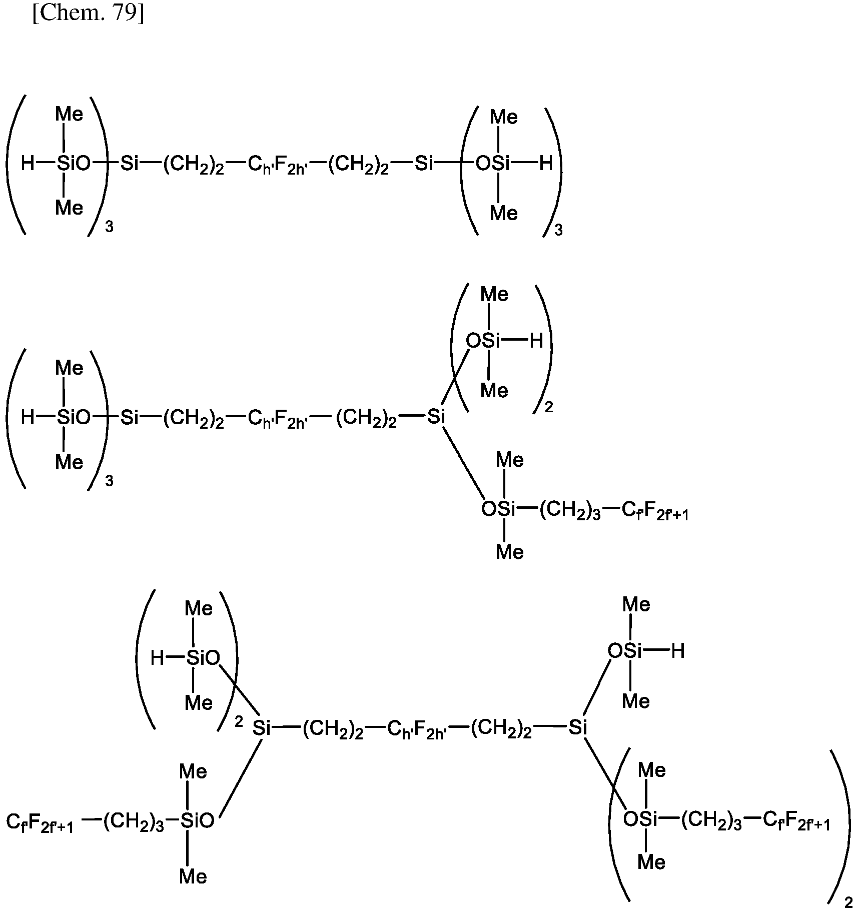 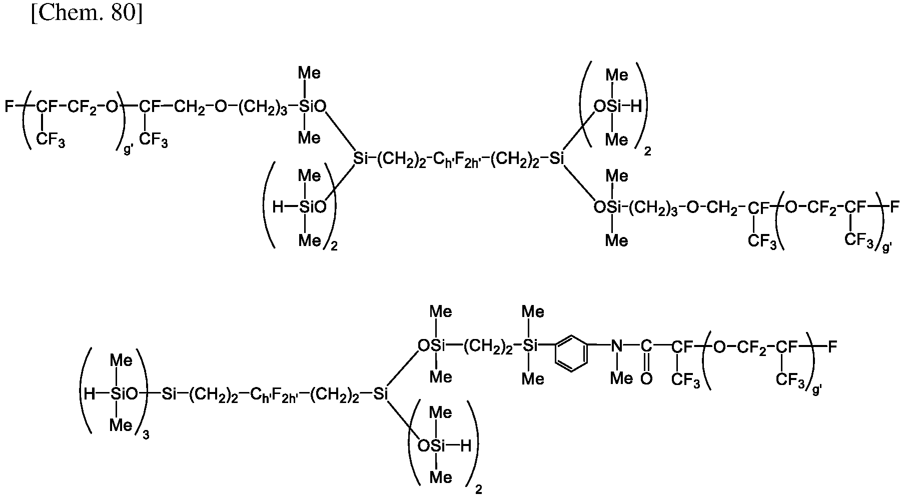 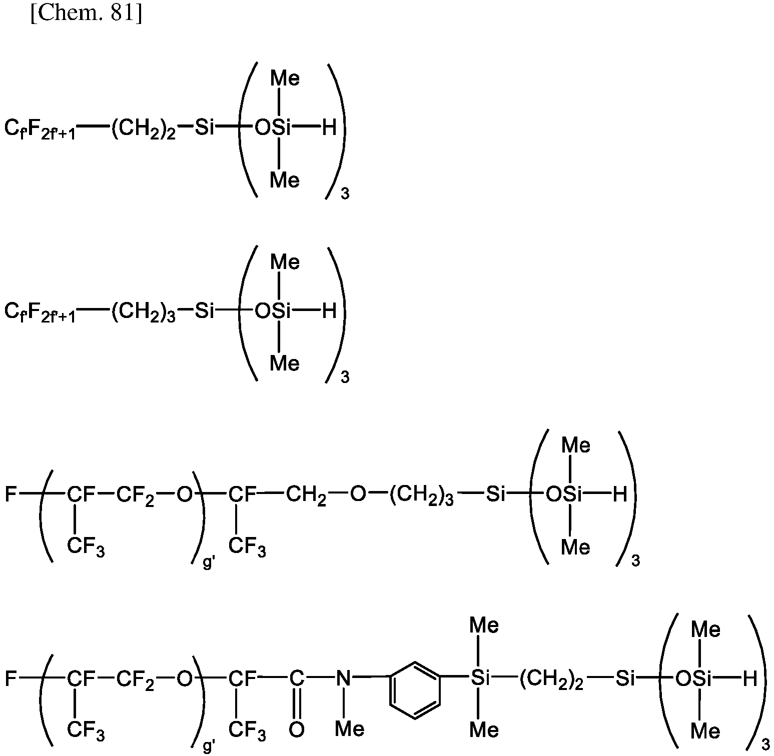 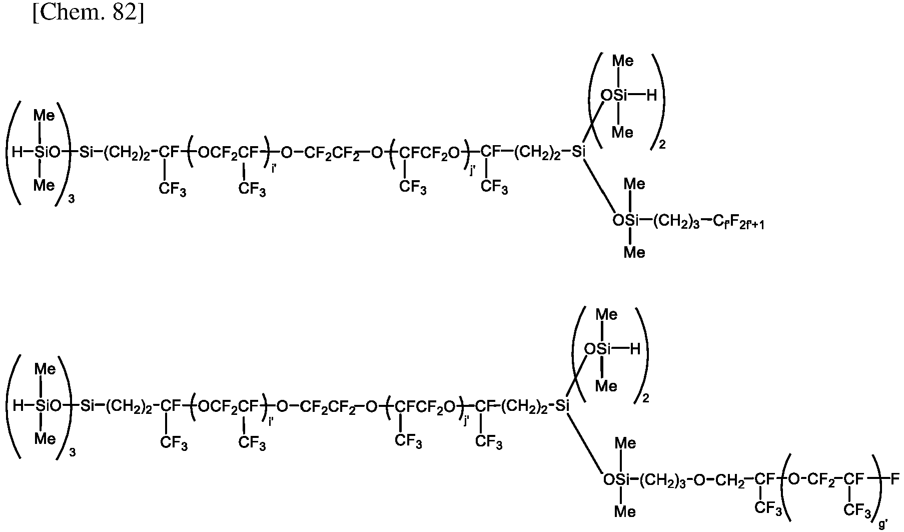 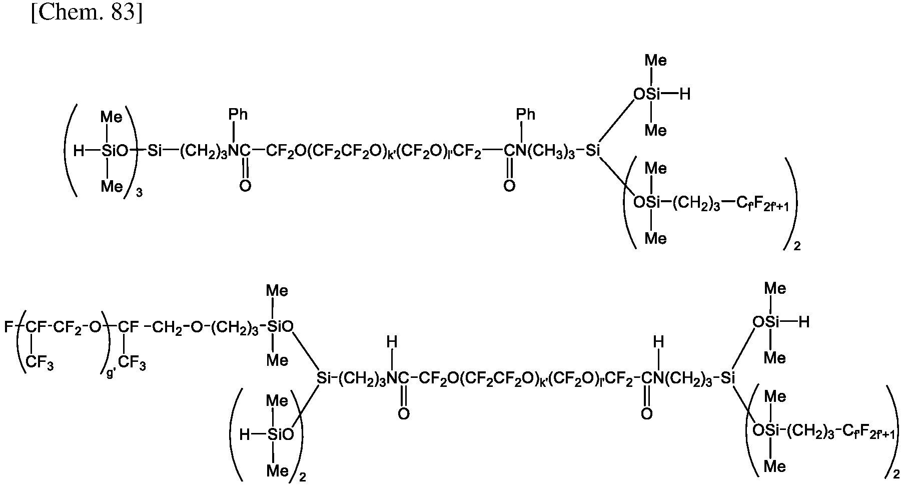 in the above formulae, f' represents an integer of 1 to 10, g' represents an integer of 1 to 50, and h' represents an integer of 1 to 20; i' and j' each represent an integer of 1 to 100 and i' + j' is an integer of 2 to 200; k' and l' each represent an integer of 1 to 50 and k' + l' is an integer of 2 to 100; and the repeating units parenthesized with k' and l' may be bonded to one another in a random manner.

The amount (molar ratio) of the component (B) used is an amount to provide 0.5 to 5 moles, preferably 0.6 to 3 moles of the silicon-bonded hydrogen atoms (SiH groups) in the component (B) to 1 mole of the alkenyl groups in the component (A). If the amount of SiH group is less than 0.5 moles, crosslinking cannot be performed to a sufficient degree. If the amount of SiH group is more than 5 moles, preservation stability may become degraded. In another case, the heat resistance of a cured product produced subsequent to curing may become degraded.

In the case where the polyfluoromonoalkenyl compounds (plasticizer, viscosity modifier and/or flexibilizer) and the adhesion enhancer described later are used as optional components, the amount of the silicon-bonded hydrogen atoms (SiH groups) in the composition according to the present invention (in particular, the total amount of silicon-bonded hydrogen atoms (SiH groups) in the component (B) and the adhesion enhancer) is preferably 0.5 to 5 moles to 1 mole of the alkenyl groups in the composition (in particular, the total amount of alkenyl groups in the component (A) described above and the polyfluoromonoalkenyl compounds (plasticizer, viscosity modifier and/or flexibilizer) described later).

The fluorine-containing organohydrogen polysiloxanes of component (B) may be used alone or a combination of two or more.

### [Component (C)]

The hydrosilylation catalyst used as a component (C) is a catalyst that facilitates the addition reaction of the components (A) and (B). The hydrosilylation catalyst is commonly a noble metal (in particular, a platinum group metal) or a compound thereof. Since they are expensive, platinum and platinum compounds, which are relatively easily available, are commonly used.

Examples of the platinum compound include chloroplatinic acid; a complex of chloroplatinic acid with an olefin, such as ethylene; a complex of chloroplatinic acid with an alcohol or a vinyl siloxane; and metal platinum supported on silica, alumina, carbon or the like.

Known examples of hydrosilylation catalysts other than platinum or a platinum compound include rhodium, ruthenium, iridium and palladium compounds, such as RhCl(PPh₃)₃, RhCl(CO)(PPh₃)₂, Ru₃(CO)₁₂, IrCl(CO)(PPh₃)₂ and Pd(PPh₃)₄, wherein Ph represents a phenyl group.

Although the above catalysts may be used in a solid form in the case where they are solid catalysts, for producing a further homogeneous cured product, it is preferable to dissolve chloroplatinic acid or the complex in an appropriate solvent, such as toluene or ethanol, to form a solution and dissolve the solution in the composition.

The above components (C) may be used alone or a combination of two or more.

The amount of the catalysts used is not limited, and an intended curing rate can be achieved depending on the catalytic amount. From an economic viewpoint or in order to form a suitable cured product, the amount of the catalysts used is commonly 0.1 to 2,000 ppm, preferably 0.1 to 500 ppm, particularly preferably 0.5 to 200 ppm (in terms of the weight of platinum group metal atoms) of the weight of the component (A). The amount of the catalysts used may be adjusted appropriately in accordance with an intended curing rate.

The conditions under which the addition reaction (hydrosilylation reaction) is conducted can be selected appropriately. The above reaction may be conducted at room temperature (25°C ± 10°C, the same applies hereinafter). In order to increase the reaction rate, the temperature may be increased to 50°C to 200°C.

### [Component (D)]

The hydrophobic silica powder of component (D) serves as a reinforcing filler. The hydrophobic silica powder enhances the rubber properties, such as mechanical strength (rubber hardness, tensile strength, tear strength and elongation at break), of the cured product (perfluoropolyether rubber cured product), which is a rubbery elastic body (elastomer), formed by curing the heat-curable perfluoropolyether rubber composition according to the present invention. The hydrophobic silica powder also enhances the injection moldability and mold releasability with which the heat-curable perfluoropolyether rubber composition according to the present invention is cured by injection molding.

Examples of the hydrophobic silica powder of component (D) include a hydrophobic silica powder (surface-hydrophobized silica powder) produced by hydrophobizing the surfaces of particles of a silica powder, such as aerosol silica (fumed silica or dry-process silica), precipitated silica (wet-process silica), spherical silica (fused silica), sol-gel silica, or silica aerogel, with at least one organosilicon compound selected from, for example, organochlorosilanes, such as dimethyl dichlorosilane, trimethyl chlorosilane, methyl trichlorosilane, vinyl dimethyl chlorosilane, divinylmethyl chlorosilane and trivinyl chlorosilane; silane compounds having a hydrolyzable group, such as organoalkoxysilanes (e.g., dimethyl dimethoxysilane, trimethylmethoxysilane, methyltrimethoxysilane, vinyldimethylmethoxysilane, divinylmethylmethoxysilane, trivinylmethoxysilane, dimethyldiethoxysilane, trimethylethoxysilane, methyltriethoxysilane, vinyldimethylethoxysilane, divinylmethylethoxysilane and trivinylethoxysilane); organodisilazanes, such as hexamethyldisilazane, 1,3-divinyl-1,1,3,3-tetramethyldisilazane, 1,3-diphenyl-1,1,3,3-tetramethyldisilazane, heptamethyldisilazane and 1,3-bis(chloromethyl)-1,1,3,3-tetramethyldisilazane; and cyclic organopolysilazanes, such as 1,3,5-trimethyl-1,3,5-trivinylcyclotrisilazane and 1,1,3,3,5,5-hexamethylcyclotrisilazane. Examples of the hydrophobic silica powder further include a hydrophobic silica powder produced by further treating the surfaces of particles of the above surface-hydrophobized silica powder with a fluorine-containing organosilane or organosiloxane having a perfluoroalkyl or perfluorooxyalkyl group in order to enhance dispersibility; and particles of a quartz powder (crystalline silica), a molten quartz powder and diatomaceous earth the surfaces of which have been hydrophobized in the same manner as described above. Among these, fumed silica is particularly preferable in order to increase mechanical strength and enhance liquid injection moldability (LIMS moldability), mold releasability and the dispersion stability of the composition.

The silica powder produced by treating the surfaces of silica particles with a surface-treating agent in the above hydrophobization treatment is preferably a silica powder that has been directly treated in a powder form. The common techniques known in the related art may be used as a normal treatment method. For example, the above untreated silica powder and one or two or more treatment agents are charged into a mechanical kneading apparatus hermetically sealed at normal pressure or a fluid bed. The resulting mixture is stirred in the presence of an inert gas at room temperature or while being heated as needed. Optionally, a catalyst may be used. Water may also be used in order to facilitate hydrolysis. Subsequent to kneading, drying is performed. Hereby, the hydrophobic silica powder is prepared. The amount of the surface-treating agent used may be equal to or more than the amount calculated on the basis of the area of the surfaces of silica powder particles which can be covered with the surface-treating agent.

The degree of hydrophobization treatment of the hydrophobic silica powder of component (D) is preferably 0.1% to 20% by weight, more preferably 0.5% to 10% by weight to the total amount of carbon deposited on the surface of particles of the hydrophobic silica powder subsequent to the treatment (carbon content: weight%). If the amount of the surface carbon is less than 0.1% by weight, it may become difficult to knead the component with the component (A) in a homogeneous manner. If the amount of the surface carbon is more than 20% by weight, the cured product of the composition may fail to have a sufficiently high mechanical strength. Note that, in the present invention, the amount of surface carbon is determined by an elemental analysis publicly known in the related art.

In the case where the carbon deposited on the treated surfaces of the hydrophobic silica powder particles of component (D) has an alkenyl group, the amount of alkenyl groups present on the above surfaces is preferably 1.0×10⁻³ to 2.0×10⁻² mol/100 g, more preferably 1.5×10⁻³ to 1.5×10⁻² mol/100 g. If the amount of the surface alkenyl group is more than 2.0×10⁻² mol/100 g, it may become difficult to knead the component with the component (A) in a homogeneous manner. In the present invention, the amount of surface alkenyl group is determined by FT-IR.

Note that the above silica powders are not capable of enhancing the rubber properties of the cured product to sufficient degrees or allowing excellent liquid injection moldability (LIMS moldability) and excellent mold releasability to be exhibited if they are not hydrophobic silica powder particles having hydrophobized surfaces (i.e., if they are untreated, hydrophilic silica powder particles the surfaces of which have not been hydrophobized).

The specific surface area of the hydrophobic silica powder of component (D) determined by BET needs to be 50 m²/g or more for enhancing the rubber properties of the cured product, such as mechanical strengths (rubber hardness, tensile strength, tear strength and elongation at break) and is preferably 100 m²/g or more. The above specific surface area is preferably 300 m²/g or less because otherwise viscosity may be significantly increased when the silica powder is added to the composition, which makes the addition of the components difficult.

The bulk density of the hydrophobic silica powder of component (D) is preferably 30 to 180 g/L, particularly preferably 40 to 150 g/L. If the bulk density of the hydrophobic silica powder is less than 30 g/L, the viscosity of the composition is significantly increased, which may make the addition of the components difficult. If the above bulk density is more than 180 g/L, sufficient reinforcing effects may fail to be imparted. Note that, in the present invention, bulk density is determined by tapping or the like.

The above hydrophobic silica powders of component (D) may be used alone or a combination of two or more.

The amount of the hydrophobic silica powder of component (D) is 10 to 40 parts by weigh, more preferably 15 to 30 parts by weight to 100 parts by weight of the component (A). If the above amount is less than 10 parts by weight, mechanical strength cannot be increased. If the above amount is more than 40 parts by weight, viscosity is significantly increased, which makes the addition of the components difficult.

### [Component (E)]

The component (E) is a hydrosilylation controlling agent, which is an optional component that may be added to the composition as needed. Examples of the hydrosilylation addition reaction controlling agent include acetylenic alcohols, such as 1-ethynyl-1-cyclohexanol (also known as: 1-ethynyl-1-hydroxycyclohexane), 3-methyl-1-butyn-3-ol, 3,5-dimethyl-1-hexyn-3-ol, 3-methyl-1-pentyn-3-ol and phenyl butynol; a product of the reaction of a chlorosilane having the perfluoroalkyl group represented by the general formula (4) above or the perfluorooxyalkyl group represented by the general formula (5) or (6) above with an acetylenic alcohol; 3-methyl-3-penten-1-yne, 3,5-dimethyl-3-hexen-1-yne, triallyl isocyanurate and the like; and polyvinyl siloxane and an organic phosphorus compound. The addition of the above agents enables curing reactivity and preservation stability to be maintained at adequate levels. The above components (E) may be used alone or a combination of two or more.

The amount of the component (E) added is not limited and may be set without impairing the object of the present invention. In the case where the composition includes the component (E), the amount of the component (E) added is preferably 0.05 to 5 parts by weight, more preferably 0.1 to 2 parts by weight to 100 parts by weight of the component (A). In the case where the composition includes the component (E), if the amount of the component (E) added is excessively small, workability may become degraded (sufficient shelf life and sufficient pot life may fail to be achieved). On the other hand, if the amount of the component (E) added is excessively large, the curability of the composition may become degraded.

### [Other Components]

In order to enhance the practical utility of the heat-curable perfluoropolyether rubber composition according to the present invention, the heat-curable perfluoropolyether rubber composition may include the following optional components other than any of the components (A) to (E) above as needed: a filler other than the component (D); an auxiliary adhesive (adhesion enhancer) that imparts self-adhesiveness to a cured product of the composition; a plasticizer; a viscosity modifier; a flexibilizer; an inorganic pigment, such as titanium oxide, iron oxide, carbon black and cobalt aluminate; a heat-resistance improver, such as titanium oxide, iron oxide, carbon black, cerium oxide, cerium hydroxide, zinc carbonate, magnesium carbonate and manganese carbonate; a thermal conductivity-imparting agent, such as alumina, boron nitride, silicon carbide and a metal powder; a conductivity-imparting agent, such as carbon black, a silver powder and conductive zinc oxide; and the like. The amounts of the above additives added are not limited and may be set without impairing the object of the present invention.

### [Auxiliary Adhesive (Adhesion Enhancer)]

The auxiliary adhesive is an organopolysiloxane, in one molecule, a hydrogen atom directly bonded to a silicon atom, a perfluoroalkyl or perfluorooxyalkyl group, and either or both of epoxy and trialkoxysilyl groups bonded to a silicon atom with a divalent hydrocarbon group that may include an oxygen atom. The auxiliary adhesive serves as an adhesive that imparts self-adhesiveness to a cured product formed by curing the composition according to the present invention.

The perfluoroalkyl or perfluorooxyalkyl group is a group introduced with consideration of, for example, compatibility with the component (A), dispersibility and post-curing uniformity.

Examples of the perfluoroalkyl or perfluorooxyalkyl group include the groups represented by the general formulae (4) to (6) above.

It is preferable that the perfluoroalkyl or perfluorooxyalkyl group be bonded to a silicon atom constituting a polysiloxane with a divalent hydrocarbon group (linking group) that may include at least one selected from a silicon atom, an oxygen atom and a nitrogen atom. The divalent hydrocarbon group may be an alkylene group, an arylene group, a combination thereof, or a group formed as a result of any of the above groups being combined with one or two or more structures or the like selected from the group consisting of an ether bond oxygen atom, an amide bond, a carbonyl bond, an ester bond, and a diorganosilylene group, such as a dimethylsilylene group. Examples thereof include the followings having 2 to 12 carbon atoms:

-CH₂CH₂-,

-CH₂CH₂CH₂-,

-CH₂CH₂CH₂OCH₂-,

-CH₂CH₂CH₂-NH-CO-,

-CH₂CH₂CH₂-N(Ph)-CO-,

-CH₂CH₂CH₂-N(Me)-CO-,

-CH₂CH₂CH₂-N(Et)-CO-,

-CH₂CH₂CH₂-N(iPr)-CO-,

-CH₂CH₂CH₂-O-CO-,

-CH₂CH₂CH₂-Si(Me)₂-O-Si(Me)₂-CH₂CH₂CH₂-,

-CH₂CH₂-Si(Me)₂-O-Si(Me)₂-CH₂CH₂CH₂OCH₂-,

-CH₂CH₂-Si(Me)₂-Ph'-N(Me)-CO-,

-CH₂CH₂-Si(Me)₂-O-Si(Me)₂-CH₂CH₂-Si(Me)₂-Ph'-N(Me)-CO-,

-CH₂-[CH₂CH₂-Si(Me)₂]₃-Ph'-NH-CO-,

-[CH₂CH₂-Si(Me)₂]₃-Ph'-N(Me)-CO-

wherein Me represents a methyl group, Et represents an ethyl group, iPr represents an isopropyl group, Ph represents a phenyl group, and Ph' represents a phenylene group.

In the example structures described above, it is preferable that the left-side bond is bonded to a silicon atom constituting a polysiloxane and the right-side bond is bonded to a perfluoroalkyl or perfluorooxyalkyl group.

The above-described organopolysiloxane is preferably a cyclic organopolysiloxane represented by the general formula (17) below. 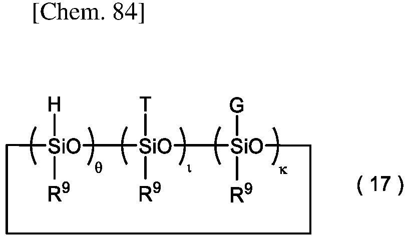 wherein θ represents an integer of 1 to 6, preferably an integer of 1 to 5, 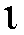 represents an integer of 1 to 4, preferably an integer of 1 to 3, κ represents an integer of 1 to 4, preferably an integer of 1 to 3, and θ + 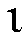 + κ is an integer of 4 to 10, preferably an integer of 4 to 8; R⁹'s each independently represent a substituted or unsubstituted monovalent hydrocarbon group, T's each independently represent a perfluoroalkyl or perfluorooxyalkyl group bonded to a silicon atom with a divalent hydrocarbon group that may include at least one selected from a silicon atom, an oxygen atom and a nitrogen atom, and G's each independently represent an epoxy or trialkoxysilyl group bonded to a silicon atom with a divalent hydrocarbon group that may include an oxygen atom; and the order in which the -(SiO)(H)R⁹- groups, -(SiO)(T)R⁹- groups and -(SiO)(G)R⁹- groups are bonded to one another is not limited.

In the general formula (17) above, R⁹'s each independently represent a substituted or unsubstituted monovalent hydrocarbon group, and examples thereof include the same groups as those of R⁸ described above. Among those, a methyl group and an ethyl group are preferable.

T's each independently represent a perfluoroalkyl or perfluorooxyalkyl group bonded to a silicon atom with a divalent hydrocarbon group that may include at least one selected from a silicon atom, an oxygen atom and a nitrogen atom. Examples of the perfluoroalkyl or perfluorooxyalkyl group include the groups represented by the general formulae (4) to (6) above. Examples of the divalent hydrocarbon group that may include at least one selected from a silicon atom, an oxygen atom and a nitrogen atom include an alkylene group, an arylene group, a combination thereof, and a group formed as a result of any of the above groups being combined with one or two or more structures or the like selected from the group consisting of an ether bond oxygen atom, an amide bond, a carbonyl bond, an ester bond, and a diorganosilylene group, such as a dimethylsilylene group.

G's each independently represent an epoxy or trialkoxysilyl group bonded to a silicon atom with a divalent hydrocarbon group that may include an oxygen atom.

Examples of the epoxy group include the epoxy group represented by the general formula (18) below and the alicyclic epoxy group represented by the general formula (19) below.

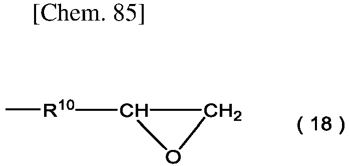

In the general formula (18) above, R¹⁰ represents a divalent hydrocarbon group that preferably has 1 to 10 carbon atoms, more preferably 1 to 5 carbon atoms, and that may include an oxygen atom, specifically, ether bond oxygen atom, a carbonyl bond, or an ester bond. Specific examples thereof include alkylene groups, such as a methylene group, an ethylene group, a propylene group, a butylene group, a hexylene group and an octylene group; cycloalkylene groups, such as a cyclohexylene group; oxyalkylene groups, such as an oxyethylene group, an oxypropylene group and an oxybutylene group; and the following structures.

-CH₂CH₂CH₂OCH₂-,

-CH₂CH₂CH₂OCO-

Specific examples of the above epoxy group include the following.

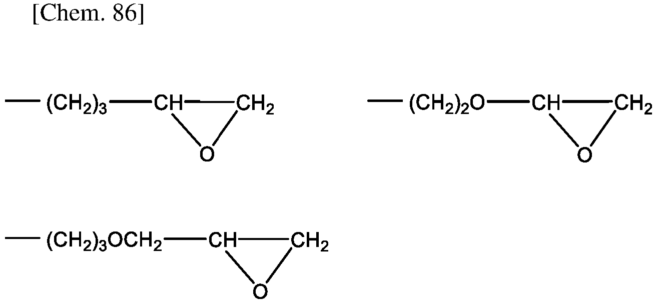

The above alicyclic epoxy group is preferably an epoxycyclohexyl group represented by the formula (19) below. 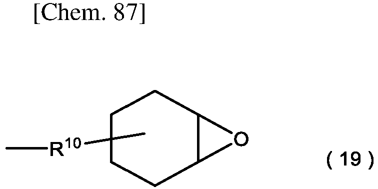 wherein R¹⁰ represent the same as above.

Specific examples of the above epoxycyclohexyl group include the following.

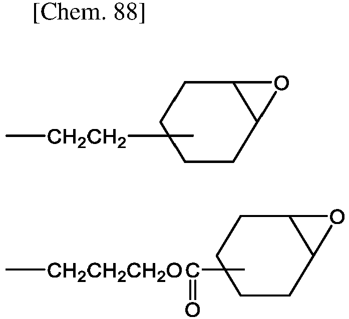

Examples of the above trialkoxysilyl group include a trialkoxysilyl group represented by the general formula (20) below.

-R¹¹-Si(OR¹²)₃ (20)

In the general formula (20) above, R¹¹ represents a divalent hydrocarbon group that preferably has 1 to 10 carbon atoms, more preferably 1 to 5 carbon atoms, and specific examples thereof include alkylene groups, such as a methylene group, an ethylene group, a propylene group, a butylene group, a hexylene group, a cyclohexylene group and an octylene group; and R¹² represents a monovalent hydrocarbon group that preferably has 1 to 8 carbon atoms, more preferably 1 to 4 carbon atoms, and specific examples thereof include alkyl groups, such as a methyl group, an ethyl group and an n-propyl group.

Specific examples of the trialkoxysilyl group include the following.

-(CH₂)₂-Si(OMe)₃,

-(CH₂)₃-Si(OMe)₃,

-(CH₂)₂-Si(OEt)₃,

-(CH₂)₃-Si(OEt)₃

wherein Me represents a methyl group and Et represents an ethyl group.

Examples of the above-described auxiliary adhesive include the following. Note that Me represents a methyl group, Et represents an ethyl group, and the arrangement of the siloxane units may be random. 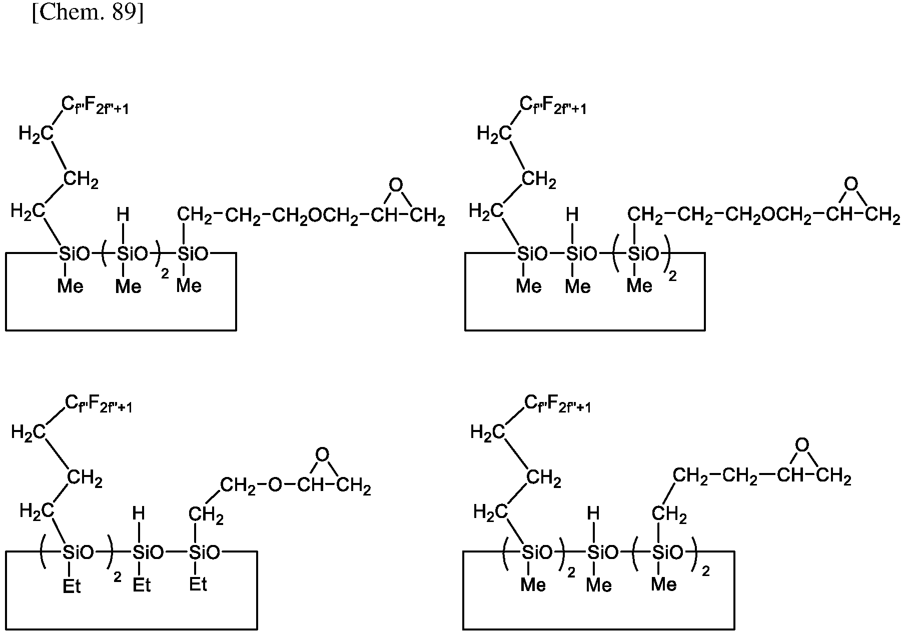 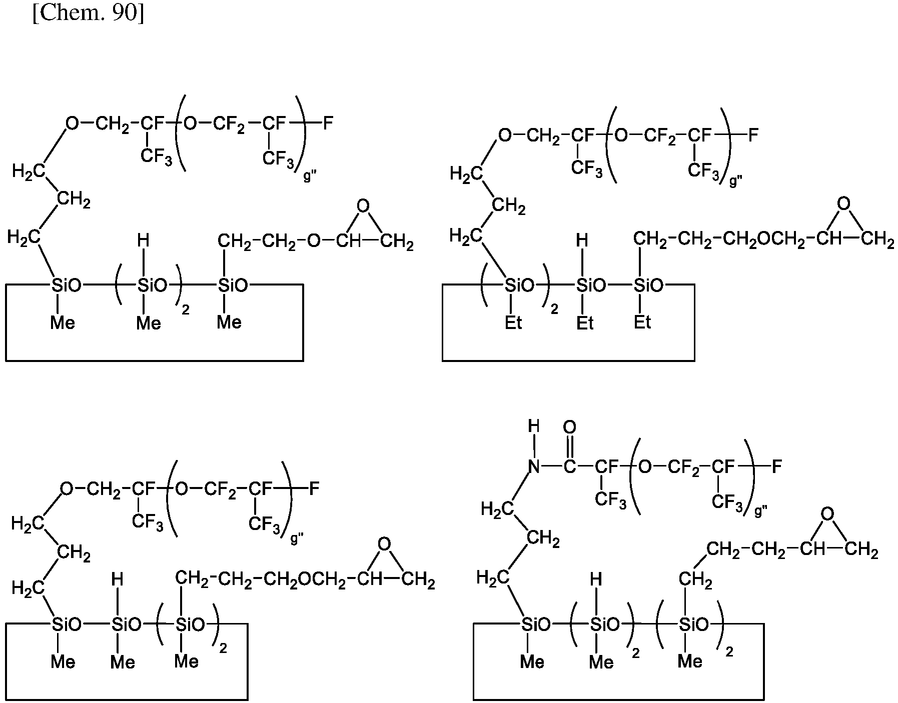 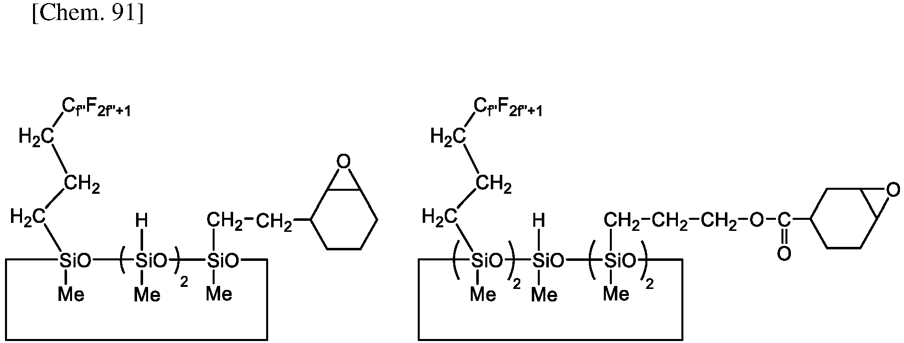 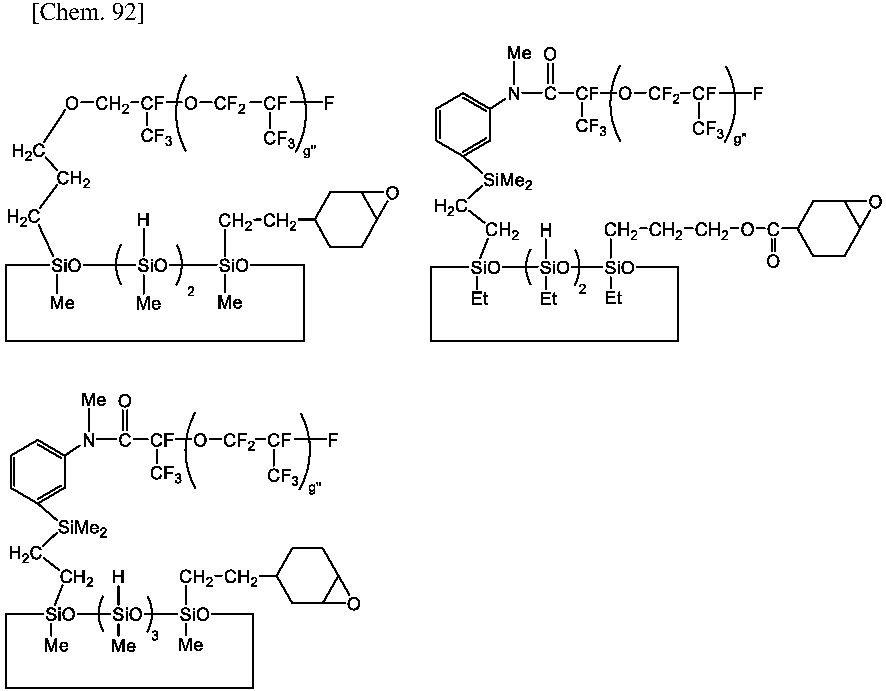 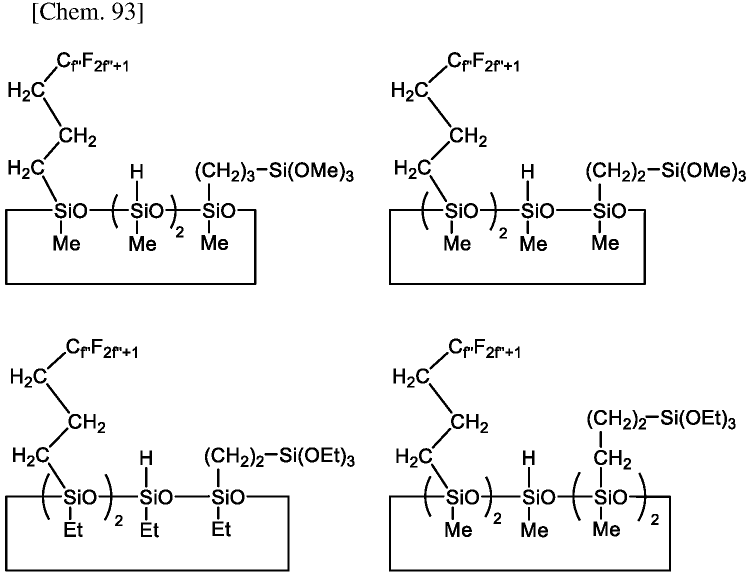 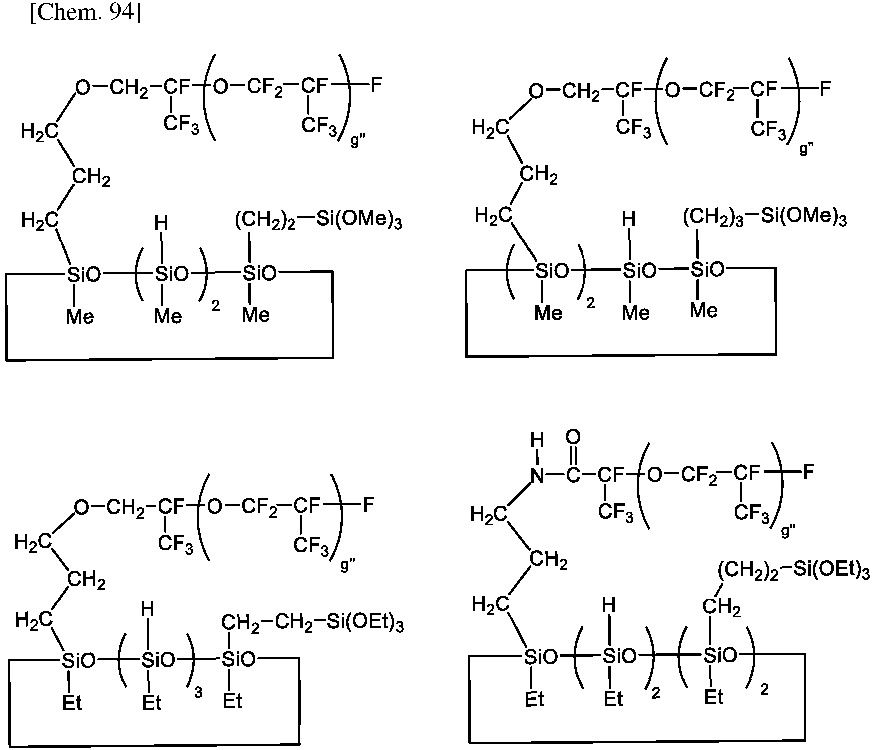 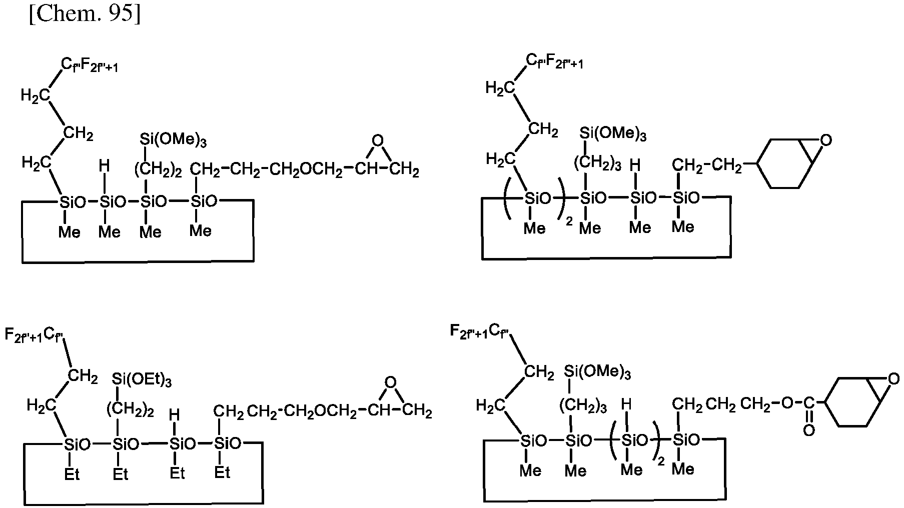 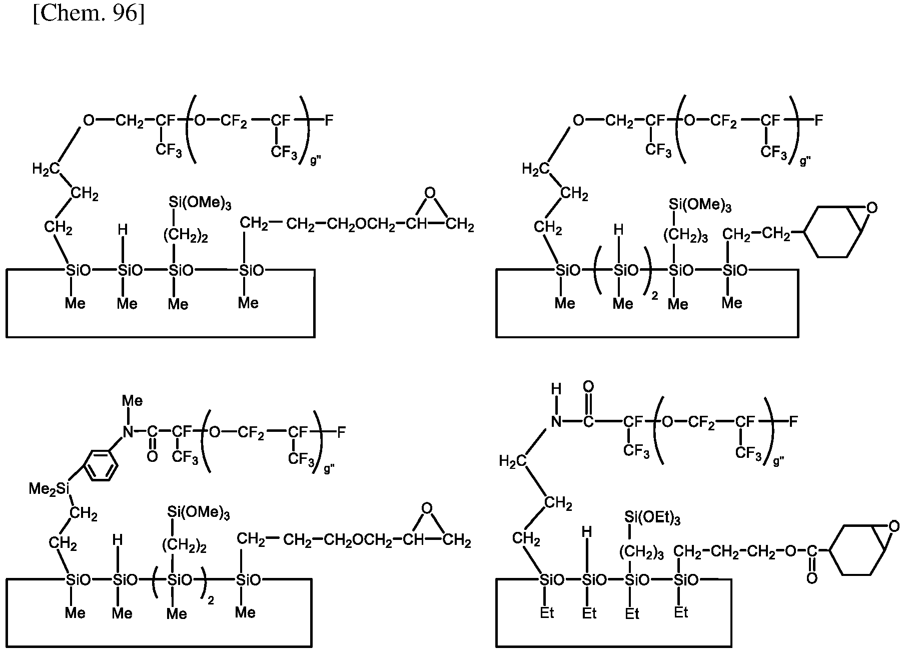 wherein f" represents an integer of 1 to 10 and g" represents an integer of 1 to 50.

The above auxiliary adhesives may be used alone or a combination of two or more. In the case where the composition includes the auxiliary adhesive, the amount of the auxiliary adhesive used is preferably 0.01 to 20 parts by weight, more preferably 0.01 to 10 parts by weight, further preferably 0.01 to 8 parts by weight to 100 parts by weight of the component (A). If the above amount is less than 0.01 parts by weight, sufficiently high adhesiveness may fail to be achieved. If the above amount is more than 20 parts by weight, the physical strengths of a cured product formed by curing the composition according to the present invention may be reduced.

As a plasticizer, a viscosity modifier, or a flexibilizer, an unreactive (nonfunctional) linear polyfluoro compound represented by the general formula (21) or (22) below which does not have a functional group (alkenyl group or hydrosilyl group) responsible for a hydrosilylation addition reaction in the molecule and/or a polyfluoro monoalkenyl compound represented by the general formula (23) below can be used.

F-(CF₂CF₂CF₂O)_{w}-J (21)

in the formula (21), J represents a group represented by CₒF₂ₒ₊₁- (wherein o represents an integer of 1 to 3); and w represents an integer of 1 to 500, preferably an integer of 2 to 300.

J-{ (OCF(CF₃)CF₂)ₓ-(OCF₂CF₂)_{y}-(OCF₂)_{z}}-O-J (22)

in the formula (22), J represents the same as above; x and y represent an integer of 0 to 300, preferably an integer of 0 to 150, except in cases where both x and y are 0; z represents an integer of 1 to 300, preferably an integer of 1 to 150; and the repeating units may be bonded to one another in a random manner.

F-[CF(CF₃)CF₂O]ₘ-CₙF₂ₙ-U-CH=CH₂ (23)

in the formula (23), m represents an integer of 1 to 200, preferably an integer of 1 to 150; n represents an integer of 1 to 3; and U represents a single bond, -CH₂-, -OCH₂-, -CH₂OCH₂-, or -CO-NR¹³-V-, in their groups, the left-side end is bonded to the CₙF₂ₙ group, while the right-side end is bonded to the CH group, R¹³ represents a hydrogen atom, a methyl group, a phenyl group, or an allyl group, and V represents -CH₂-, a group represented by structural formula (24) below, or a group represented by structural formula (25) below: 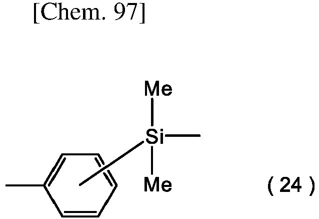 which is a dimethylphenylsilylene group having a dimethylsilylene group at o-, m-, or p-position, the left-side and right-side ends are bonded to a nitrogen atom and a carbon atom, respectively, and Me represents a methyl group, 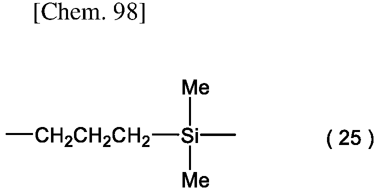 wherein the left-side and right-side ends are bonded to a nitrogen atom and a carbon atom, respectively, and Me represents a methyl group.

Specific examples of the linear polyfluoro compound represented by the general formula (21) or (22) above include the following.

F-(CF₂CF₂CF₂O)_{w'}-CF₂CF₃

wherein w' represents an integer of 1 to 200.

CF₃-{(OCF(CF₃)CF₂)_{x'}-(OCF₂)_{z'}}-O-CF₃

wherein x' represents an integer of 1 to 200, z' represents an integer of 1 to 200, and the repeating units may be bonded to one another in a random manner.

CF₃-{(OCF₂CF₂)_{y'}-(OCF₂)_{z'}}-O-CF₃

wherein y' represents an integer of 1 to 200, z' represents an integer of 1 to 200, and the repeating units may be bonded to one another in a random manner.

The linear polyfluoro compounds represented by the general formulae (21) and (22) above may be used alone or a combination of two or more.

Specific examples of the polyfluoromonoalkenyl compound represented by the general formula (23) above include the following. 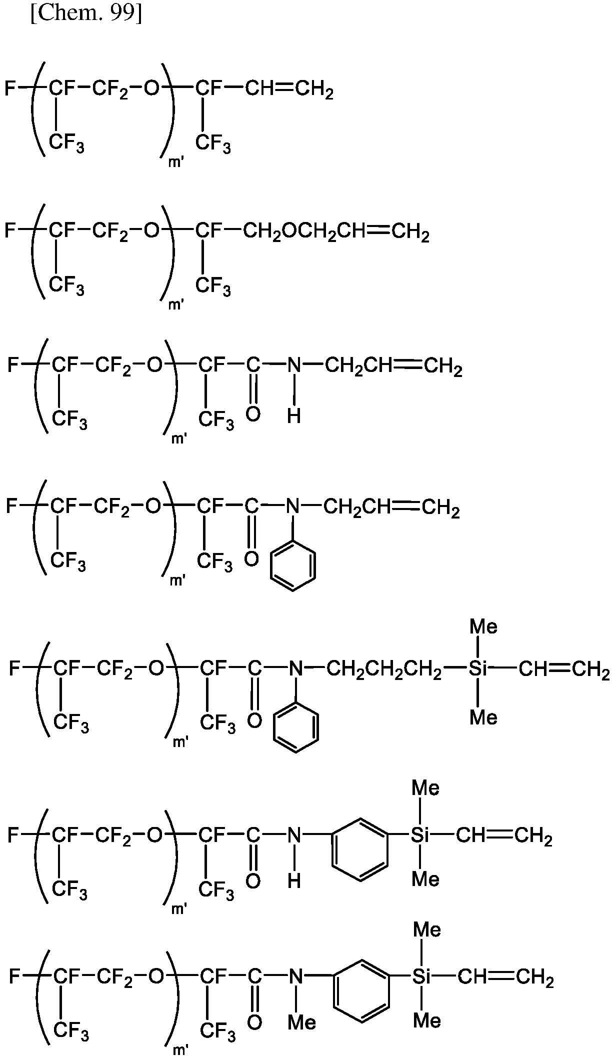 wherein m' represents an integer of 1 to 200, and Me represents a methyl group.

The polyfluoromonoalkenyl compounds represented by the general formula (23) above may be used alone or a combination of two or more.

The amount of the additives used is not limited and may be set without impairing the object of the present invention.

The heat-curable perfluoropolyether rubber composition according to the present invention can be prepared by homogeneously mixing predetermined amounts of the components (A) to (D) described above, the optional component (E), and the other components as needed with one another using a common method known in the related art. In particular, the heat-curable perfluoropolyether rubber composition according to the present invention is preferably prepared using the following method. First, predetermined amounts of the components (A) and (D) are kneaded together using a machine, such as a planetary mixer or a kneader. Although the above components may be mixed at room temperature without troubles, heating may be performed within a temperature range at which polymers do not become decomposed in order to, for example, stabilize the shear heat. It is desirably performed at 100°C to 300°C for about 10 minutes to about 8 hours. The resulting kneaded material is cooled to room temperature and further treated (kneaded) at room temperature (25°C ± 10°C) with a three-roll mill or the like. Subsequently, a predetermined amount of the component (C) is added to the kneaded material using a planetary mixer or the like, and the resulting mixture is kneaded at room temperature for 1 to 120 minutes. Then, as needed, predetermined amounts of the component (E) and the other optional components are added to the mixture, which is kneaded at room temperature for 1 to 120 minutes. Subsequently, a predetermined amount of the component (B) is added to the mixture, which is kneaded at room temperature for 1 to 120 minutes. Hereby, a heat-curable perfluoropolyether rubber composition is prepared.

Conventional methods may be employed for molding the heat-curable perfluoropolyether rubber composition according to the present invention. An optimum method that serves the intended purpose can be selected from injection molding, transfer molding, casting, compression molding, extrusion molding, coating and the like. In particular, it is preferable to mold the heat-curable perfluoropolyether rubber composition according to the present invention by injection molding because the heat-curable perfluoropolyether rubber composition is in the form of a liquid having a low viscosity and has excellent injection moldability and excellent mold releasability before curing.

In this case, the heat-curable perfluoropolyether rubber composition can be cured by being heated at 100°C to 200°C, particularly 110°C to 190°C, and especially 120°C to 170°C for 0.1 to 30 minutes, particularly 1 to 30 minutes, and especially 5 to 20 minutes. Furthermore, optionally, secondary vulcanization (post-curing) may be performed at 100°C to 230°C for about 1 to about 24 hours.

Since the cured product of the heat-curable perfluoropolyether rubber composition according to the present invention, which is prepared by the above-described method, is excellent in terms of heat resistance, chemical resistance, solvent resistance, low-temperature properties, rubber properties (e.g., mechanical strength and elongation) and the like, it can be suitably used for producing, for example, the following items: diaphragms, such as a diaphragm for fuel regulators, a diaphragm for pulsation dampers, a diaphragm for oil pressure switches, and a diaphragm for EGRs; valves, such as a valve for canisters and a valve for power control; O-rings, such as an O-ring for quick connectors and an O-ring for injectors; sealants, such as an oil seal and a gasket for cylinder heads; rubber parts for chemical plants, such as a diaphragm for pumps, a valve, an O-ring, a hose, a packing and sealant, such as an oil seal or a gasket; rubber parts for ink-jet printers; rubber parts for semiconductor manufacturing lines, such as a diaphragm, a valve, an O-ring, a packing and a sealant such as a gasket, for equipment that come into contact with chemicals; valves required to have low friction and wear resistance; rubber parts for analysis and physical and chemical appliances, such as a diaphragm for pumps, a valve and a sealant (e.g., an O-ring or a packing); rubber parts for medical equipment, such as a pump, a valve and a joint; and a tent fabric material, a sealant, a molded part, an extruded part, a coating material, a copying machine roller material, an electrical moistureproof coating material, a potting material for sensors, a sealant for fuel cells and a laminated rubber fabric.

### EXAMPLES

The present invention is described specifically with reference to Synthesis Examples, Examples and Comparative Examples. It should be noted that the present invention is not limited by Examples below. In the formulae described below as examples, Me represents a methyl group. In Examples below, the amount of alkenyl groups and SiH groups were determined by ¹H-NMR, and room temperature was 25°C.

The components (A) to (E) used in Examples and Comparative Examples below are described below.

### Component (A)

(A-1): Perfluoropolyether polymer represented by the following formula
(p1 + q1 = 120, pl:ql = 48:52, amount of alkenyl group: 0.017 mol/100 g.)

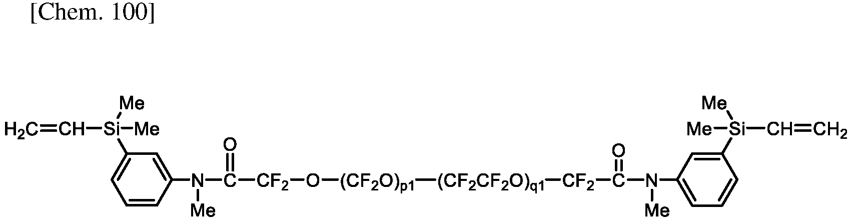

(A-2): Perfluoropolyether polymer represented by the following formula
(p1 + q1 = 90, pl:ql = 48:52, amount of alkenyl group: 0.023 mol/100 g.)

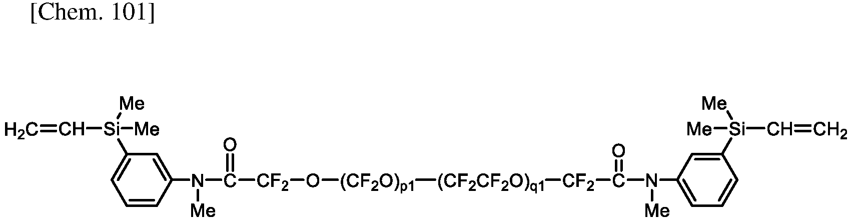

(A-3): Perfluoropolyether polymer represented by the following formula
(p1 + q1 = 35, pl:ql = 48:52, amount of alkenyl group: 0.053 mol/100 g.)

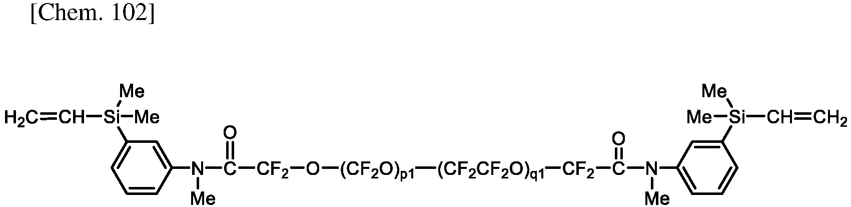

(A-4): Perfluoropolyether polymer represented by the following formula
(r1 = 120, amount of alkenyl group: 0.0098 mol/100 g.)

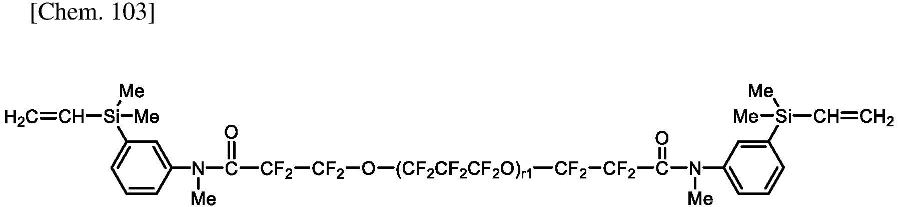

(A-5): Perfluoropolyether polymer represented by the following formula
(qs1 + qs2 = 58, amount of alkenyl group: 0.0097 mol/100 g.)

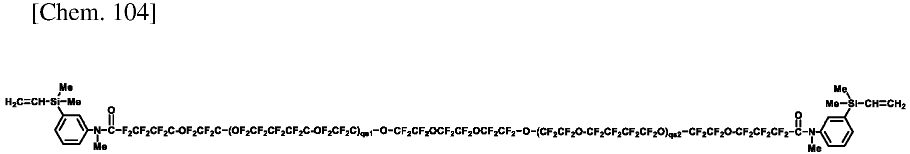

(A-6): Perfluoropolyether polymer represented by the following formula
(p1 + q1 = 120, pl:ql = 48:52, amount of alkenyl group: 0.018 mol/100 g.)

[Chem. 105] H₂C=CH-CH₂-O-CH₂-CF₂-O-(CF₂O)ₚ₁-(CF₂CF₂O)_{q1}-CF₂-CH₂-O-CH₂-CH=CH₂

(A-7): Perfluoropolyether polymer represented by the following formula
(p1 + q1 = 120, pl:ql = 48:52, amount of alkenyl group: 0.017 mol/100 g.)

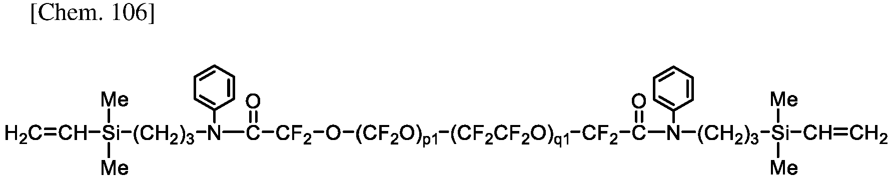

(A-8): Perfluoropolyether polymer represented by the following formula
(p1 + q1 = 120, pl:ql = 48:52, amount of alkenyl group: 0.036 mol/100 g.)

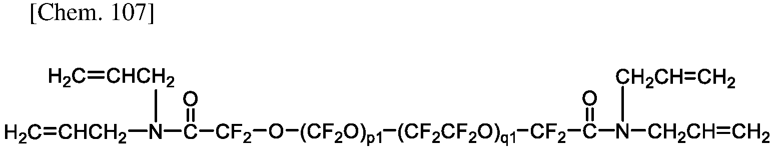

(A-9): Perfluoropolyether polymer represented by the following formula
(p1 + q1 = 120, pl:ql = 48:52, amount of alkenyl group: 0.034 mol/100 g.)

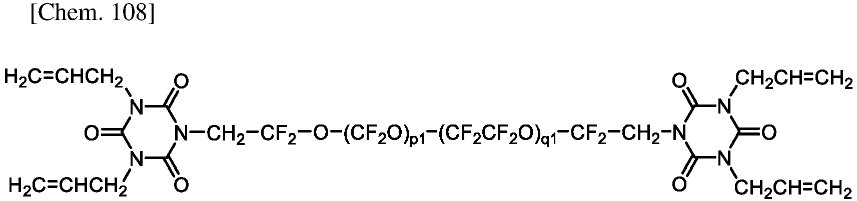

(A-10): Alkenyl group-containing polymer represented by the following formula
(a1 + b1 = 120, a1:b1 = 1:1, amount of alkenyl group: 0.0092 mol/100 g.)

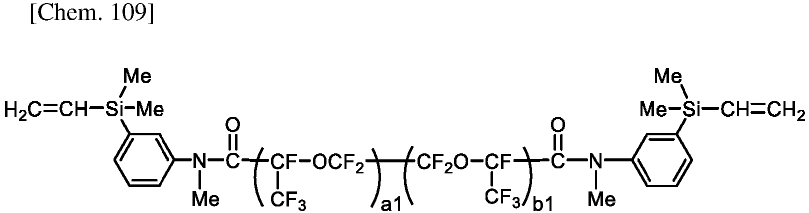

(A-11): Alkenyl group-containing polymer represented by the following formula
(a1 + b1 = 100, a1:b1 = 1:1, amount of alkenyl group: 0.012 mol/100 g.)

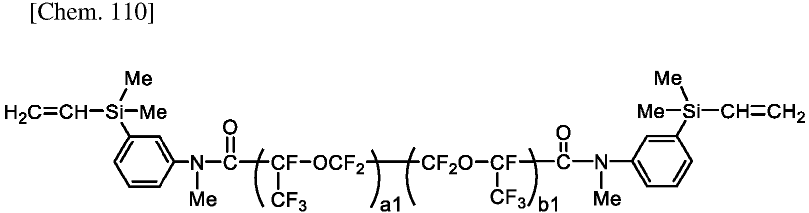

(A-12): Alkenyl group-containing polymer represented by the following formula
(a1 + b1 = 35, a1:b1 = 1:1, amount of alkenyl group: 0.030 mol/100 g.)

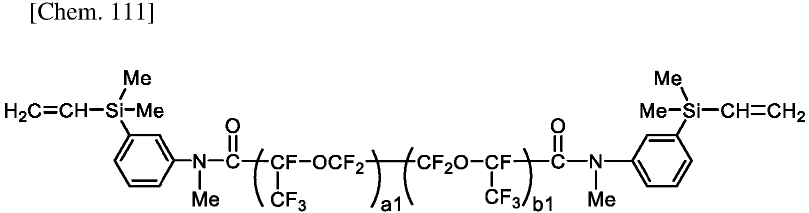

### Component (B)

(B-1): Compound represented by the following formula
(amount of SiH group: 0.0050 mol/g)

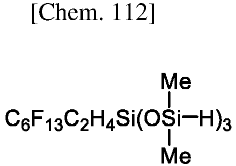

### Component (C)

### (C-1): Toluene solution of platinum-divinyltetramethyldisiloxane complex (platinum concentration: 0.5% by weight)

### Component (D)

(D-1): Hydrophobic fumed silica prepared by hydrophobizing the surfaces of particles of A-130 (produced by Nippon Aerosil Co., Ltd., hydrophilic fumed silica) with a mixed treatment agent of hexamethyldisilazane and 1,3-divinyl-1,1,3,3-tetramethyldisilazane (BET specific surface area: about 200 m²/g, the amount of surface carbon (carbon content): about 5.0% by weight, the amount of surface vinyl groups: 3.00 × 10⁻³ mol/100 g, bulk density: about 50 g/L)
(D-2): R-972 (Produced by Nippon Aerosil Co., Ltd., hydrophobic fumed silica particles the surfaces of which were hydrophobized with dimethyl dichlorosilane, BET specific surface area: about 110 m²/g, the amount of surface carbon (carbon content): 0.6% to 1.2% by weight, bulk density: about 50 g/L)
(D-3): R-974 (Produced by Nippon Aerosil Co., Ltd., hydrophobic fumed silica particles the surfaces of which were hydrophobized with dimethyl dichlorosilane, BET specific surface area: about 170 m²/g, the amount of surface carbon (carbon content): 0.9% to 1.5% by weight, bulk density: about 50 g/L)
(D-4): R-976 (Produced by Nippon Aerosil Co., Ltd., hydrophobic fumed silica particles the surfaces of which were hydrophobized with dimethyldichlorosilane, BET specific surface area: about 250 m²/g, the amount of surface carbon (carbon content): about 1.5% by weight, bulk density: about 50 g/L)
(D-5): R-8200 (Produced by Nippon Aerosil Co., Ltd., hydrophobic fumed silica particles the surfaces of which were hydrophobized with hexamethyldisilazane, BET specific surface area: about 160 m²/g, the amount of surface carbon (carbon content): about 2.0 to 4.0% by weight, bulk density: about 140 g/L)
(D-6): A-130 (Produced by Nippon Aerosil Co., Ltd., hydrophilic fumed silica, BET specific surface area: about 130 m²/g, bulk density: about 50 g/L)
(D-7): A-200 (Produced by Nippon Aerosil Co., Ltd., hydrophilic fumed silica, BET specific surface area: about 200 m²/g, bulk density: about 50 g/L)
(D-8): A-300 (Produced by Nippon Aerosil Co., Ltd., hydrophilic fumed silica, BET specific surface area: about 300 m²/g, bulk density: about 50 g/L)

### Component (E)

### (E-1): 50-weight% toluene solution of 1-ethynyl-1-hydroxycyclohexane

### [Examples 1 to 17 and Comparative Examples 1 to 13]

In Examples 1 to 17 and Comparative Examples 1 to 13, a composition was prepared in the following manner using predetermined amount of the components described in Tables 3 to 6. The composition was molded and cured in accordance with the following method to form a cured product, which was evaluated in terms of tensile strength, elongation at break, LIMS moldability and mold releasability.

### <Preparation of Compositions in Examples 1 to 17 and Comparative Examples 1 to 13>

The predetermined amounts of the components (A) and (D) described in Tables 3 to 6 were kneaded together at 120°C for 1 hour with a planetary mixer. After the kneaded material had been cooled to room temperature, it was subjected to a three-roll mill at room temperature twice. Subsequently, to 130 parts by weight of the kneaded material, the predetermined amount of the component (C) as described in Tables 3 to 6 was added, and the resulting mixture was kneaded at room temperature for 10 minutes with a planetary mixer. Then, the predetermined amount of the component (E) as described in Tables 3 to 6 was added to the kneaded material, and the resulting mixture was kneaded at room temperature for 10 minutes with a planetary mixer. Subsequently, the predetermined amount of the component (B) as described in Tables 3 to 6 was added to the kneaded material, and the resulting mixture was kneaded at room temperature for 10 minutes with a planetary mixer. Hereby, a composition was prepared. Note that the component (B) was added such that [SiH groups included in component (B)/Alkenyl groups included in component (A)] = 1.2 (molar ratio).

### <Preparation of Cured Products in Examples 1 to 17 and Comparative Examples 1 to 13>

The compositions prepared in Examples 1 to 17 and Comparative Examples 1 to 13 were each subjected to press crosslinking (primary crosslinking) at 150°C for 10 minutes to form a rubber sheet having a thickness of 2.0 mm. The rubber sheet was further subjected to oven crosslinking (secondary crosslinking) at 200°C for 4 hours to prepare a cured product.

### <Tensile Strength of Cured Product>

The tensile strength of each of the cured products prepared in Examples 1 to 17 and Comparative Examples 1 to 13 was measured in accordance with JIS K 6249 and evaluated on the basis of the following standard. Tables 3 to 6 list the results.

### [Evaluation Standard]

⊚: 10.0 MPa or more
○: 7.0 MPa or more and less than 10.0 MPa
△: 4.0 MPa or more and less than 7.0 MPa
×: Less than 4.0 MPa

### <Elongation of Cured Product at Break>

The elongation of each of the cured products prepared in Examples 1 to 17 and Comparative Examples 1 to 13 at break was measured in accordance with JIS K 6249 and evaluated on the basis of the following standard. Tables 3 to 6 list the results.

### [Evaluation Standard]

⊚: 300% or more
○: 200% or more and less than 300%
△: 100% or more and less than 200%
×: Less than 100%

### <LIMS Moldability and Mold Releasability>

O-rings (size 214) were molded using an injection molding machine (10-ton LIMS molding machine "NS-10 LIMS Model" produced by Nissei Plastic Industrial Co., Ltd.) and a 9-cavity mold for O-rings (size 214) with reference to JP-A 2005-24695 (Patent Document 3) under the injection molding conditions described in Table 1. The moldability of each of the compositions was evaluated on a scale of 1 to 4 as described below. LIMS moldability consists of two evaluation items: "injection moldability" in molding and "molded article appearance" of the resulting molded article. For each evaluation item, the evaluation standard as described in Table 2 was set. In addition, ease of removing the O-ring from the mold, that is, mold releasability, was evaluated on the basis of the following standard. Tables 3 to 6 list the results.

### <Standard for Evaluation of Mold Releasability>

⊚: Excellent
O: Good
△: Fair
×: Difficult

**[Table 1]**

| | | |
|---|---|---|
| Amount of material fed (mm) | | 6 |
| Molding temperature (°C) | Stationary mold | 190 |
| | Movable mold | 190 |
| Injection pressure (%) | Primary pressure | 60 |
| | Secondary pressure | 20 |
| Injection rate (%) | Primary rate | 5 |
| | Secondary rate | 5 |
| Injection time (sec) | | 1.5 |
| Vulcanization time (sec) | | 30 |
| Vacuum operation | | ON |
| Degree of vacuum (Pa) | | 0.1 |

**[Table 2]**

| Evaluation grade | Injection moldability | Molded article appearance |
|---|---|---|
| ⊚ | Defect or the like in the flow of the composition was not confirmed under the injection conditions described in Table 1 | Poor appearance or the like was not confirmed |
| ○ | Defect or the like in the flow of the composition was not confirmed when the injection conditions were adjusted | Poor appearance or the like was not confirmed |
| Δ | Defect or the like in the flow of the composition was not confirmed when the injection conditions were adjusted | Entry of air, gate scar and the like were confirmed in small amounts |
| × | Defect or the like in the flow of the composition was confirmed even when the injection conditions were adjusted | Entry of air, gate scar and the like were confirmed in considerable amounts |

**[Table 3]**

| Content in composition (pbw) | | Example | | | | | | | | |
|---|---|---|---|---|---|---|---|---|---|---|
| | | 1 | 2 | 3 | 4 | 5 | 6 | 7 | 8 | 9 |
| Component (A) | A-1 | 100 | 100 | 100 | 100 | 100 | 100 | 100 | 80 | 80 |
| | A-2 | - | - | - | - | - | - | - | 20 | - |
| | A-3 | - | - | - | - | - | - | - | - | 20 |
| | A-4 | - | - | - | - | - | - | - | - | - |
| | A-5 | - | - | - | - | - | - | - | - | - |
| | A-6 | - | - | - | - | - | - | - | - | - |
| | A-7 | - | - | - | - | - | - | - | - | - |
| | A-8 | - | - | - | - | - | - | - | - | - |
| | A-9 | - | - | - | - | - | - | - | - | - |
| | A-10 | - | - | - | - | - | - | - | - | - |
| | A-11 | - | - | - | - | - | - | - | - | - |
| | A-12 | - | - | - | - | - | - | - | - | - |
| Component (B) | B-1 | 4.08 | 4.08 | 4.08 | 4.08 | 4.08 | 4.08 | 4.08 | 4.37 | 5.81 |
| Component (C) | C-1 | 0.50 | 0.50 | 0.50 | 0.50 | 0.50 | 0.50 | 0.50 | 0.50 | 0.50 |
| Component (D) | D-1 | 30 | 15 | 40 | - | - | - | - | 30 | 30 |
| | D-2 | - | - | - | 30 | - | - | - | - | - |
| | D-3 | - | - | - | - | 30 | - | - | - | - |
| | D-4 | - | - | - | - | - | 30 | - | - | - |
| | D-5 | - | - | - | - | - | - | 30 | - | - |
| | D-6 | - | - | - | - | - | - | - | - | - |
| | D-7 | - | - | - | - | - | - | - | - | - |
| | D-8 | - | - | - | - | - | - | - | - | - |
| Component (E) | E-1 | 0.20 | 0.20 | 0.20 | 0.20 | 0.20 | 0.20 | 0.20 | 0.20 | 0.20 |
| Evaluation results | | | | | | | | | | |
| Tensile strength (MPa) | | ⊚ | ○ | ⊚ | ⊚ | ⊚ | ⊚ | ⊚ | ⊚ | ○ |
| Elongation at break (%) | | ⊚ | ○ | ○ | ○ | ⊚ | ⊚ | ⊚ | ○ | ○ |
| LIMS moldability | | ⊚ | ⊚ | ○ | ⊚ | ⊚ | ⊚ | ⊚ | ⊚ | ⊚ |
| Mold releasability | | ⊚ | ○ | ○ | ⊚ | ⊚ | ○ | ⊚ | ⊚ | ⊚ |

**[Table 4]**

| Content in composition (pbw) | | Example | | | | | | | |
|---|---|---|---|---|---|---|---|---|---|
| | | 10 | 11 | 12 | 13 | 14 | 15 | 16 | 17 |
| Component (A) | A-1 | - | 90 | - | - | - | - | - | - |
| | A-2 | 90 | - | - | - | - | - | - | - |
| | A-3 | 10 | 10 | - | - | - | - | - | - |
| | A-4 | - | - | 100 | - | - | - | - | - |
| | A-5 | - | - | - | 100 | - | - | - | - |
| | A-6 | - | - | - | - | 100 | - | - | - |
| | A-7 | - | - | - | - | - | 100 | - | - |
| | A-8 | - | - | - | - | - | - | 100 | - |
| | A-9 | - | - | - | - | - | - | - | 100 |
| | A-10 | - | - | - | - | - | - | - | - |
| | A-11 | - | - | - | - | - | - | - | - |
| | A-12 | - | - | - | - | - | - | - | - |
| Component (B) | B-1 | 6.24 | 4.94 | 2.35 | 2.33 | 4.32 | 4.08 | 8.64 | 8.16 |
| Component (C) | C-1 | 0.50 | 0.50 | 0.50 | 0.50 | 0.50 | 0.50 | 0.50 | 0.50 |
| Component (D) | D-1 | 30 | 30 | 30 | 30 | 30 | 30 | 30 | 30 |
| | D-2 | - | - | - | - | - | - | - | - |
| | D-3 | - | - | - | - | - | - | - | - |
| | D-4 | - | - | - | - | - | - | - | - |
| | D-5 | - | - | - | - | - | - | - | - |
| | D-6 | - | - | - | - | - | - | - | - |
| | D-7 | - | - | - | - | - | - | - | - |
| | D-8 | - | - | - | - | - | - | - | - |
| Component (E) | E-1 | 0.20 | 0.20 | 0.20 | 0.20 | 0.20 | 0.20 | 0.20 | 0.20 |
| Evaluation results | | | | | | | | | |
| Tensile strength (MPa) | | ○ | ○ | ⊚ | ⊚ | ⊚ | ⊚ | ○ | ⊚ |
| Elongation at break (%) | | △ | ○ | ⊚ | ⊚ | ⊚ | ⊚ | ○ | ○ |
| LIMS moldability | | ⊚ | ⊚ | ○ | ○ | ○ | ○ | ○ | ○ |
| Mold releasability | | ⊚ | ⊚ | ⊚ | ⊚ | ⊚ | ⊚ | ⊚ | ⊚ |

**[Table 5]**

| Content in composition (pbw) | | Comparative Example | | | | | |
|---|---|---|---|---|---|---|---|
| | | 1 | 2 | 3 | 4 | 5 | 6 |
| Component (A) | A-1 | 100 | 100 | 100 | 100 | 100 | 100 |
| | A-2 | - | - | - | - | - | - |
| | A-3 | - | - | - | - | - | - |
| | A-4 | - | - | - | - | - | - |
| | A-5 | - | - | - | - | - | - |
| | A-6 | - | - | - | - | - | - |
| | A-7 | - | - | - | - | - | - |
| | A-8 | - | - | - | - | - | - |
| | A-9 | - | - | - | - | - | - |
| | A-10 | - | - | - | - | - | - |
| | A-11 | - | - | - | - | - | - |
| | A-12 | - | - | - | - | - | - |
| Component (B) | B-1 | 4.08 | 4.08 | 4.08 | 4.08 | 4.08 | 4.08 |
| Component (C) | C-1 | 0.50 | 0.50 | 0.50 | 0.50 | 0.50 | 0.50 |
| Component (D) | D-1 | - | - | - | - | 5 | 50 |
| | D-2 | - | - | - | - | - | - |
| | D-3 | - | - | - | - | - | - |
| | D-4 | - | - | - | - | - | - |
| | D-5 | - | - | - | - | - | - |
| | D-6 | 30 | - | - | - | - | - |
| | D-7 | - | 30 | - | - | - | - |
| | D-8 | - | - | 30 | - | - | - |
| Component (E) | E-1 | 0.20 | 0.20 | 0.20 | 0.20 | 0.20 | 0.20 |
| Evaluation results | | | | | | | |
| Tensile strength (MPa) | | △ | △ | △ | × | × | × |
| Elongation at break (%) | | △ | ○ | △ | × | △ | × |
| LIMS moldability | | ○ | △ | ○ | ○ | ○ | ○ |
| Mold releasability | | × | △ | △ | × | △ | ⊚ |

**[Table 6]**

| Content in composition (pbw) | | Comparative Example | | | | | | |
|---|---|---|---|---|---|---|---|---|
| | | 7 | 8 | 9 | 10 | 11 | 12 | 13 |
| Component (A) | A-1 | - | - | - | - | - | - | - |
| | A-2 | - | - | - | - | - | - | - |
| | A-3 | - | - | - | - | - | - | - |
| | A-4 | - | - | - | - | - | - | - |
| | A-5 | - | - | - | - | - | - | - |
| | A-6 | - | - | - | - | - | - | - |
| | A-7 | - | - | - | - | - | - | - |
| | A-8 | - | - | - | - | - | - | - |
| | A-9 | - | - | - | - | - | - | - |
| | A-10 | 100 | 80 | 80 | | 90 | 100 | - |
| | A-11 | - | 20 | - | 90 | - | - | - |
| | A-12 | - | - | 20 | 10 | 10 | - | 100 |
| Component (B) | B-1 | 2.21 | 2.34 | 3.21 | 3.31 | 2.71 | 2.21 | 7.20 |
| Component (C) | C-1 | 0.50 | 0.50 | 0.50 | 0.50 | 0.50 | 0.50 | 0.50 |
| Component (D) | D-1 | 30 | 30 | 30 | 30 | 30 | 5 | 50 |
| | D-2 | - | - | - | - | - | - | - |
| | D-3 | - | - | - | - | - | - | - |
| | D-4 | - | - | - | - | - | - | - |
| | D-5 | - | - | - | - | - | - | - |
| | D-6 | - | - | - | - | - | - | - |
| | D-7 | - | - | - | - | - | - | - |
| | D-8 | - | - | - | - | - | - | - |
| Component (E) | E-1 | 0.20 | 0.20 | 0.20 | 0.20 | 0.20 | 0.20 | 0.20 |
| Evaluation results | | | | | | | | |
| Tensile strength (MPa) | | ⊚ | ⊚ | ○ | △ | ○ | × | × |
| Elongation at break (%) | | ⊚ | ○ | ○ | △ | △ | △ | × |
| LIMS moldability | | × | × | × | △ | △ | ○ | ○ |
| Mold releasability | | ○ | ○ | ⊚ | ⊚ | ○ | △ | ⊚ |

## Claims

1. A heat-curable perfluoropolyether rubber composition comprising:
(A) 100 parts by weight of a perfluoropolyether polymer having at least two alkenyl groups in the molecular chain, represented by the general formula (1) or (2) below:
Rf(L-MWₐ)₂ (1)
Rf(Q-(Y)_{b}-B)₂ (2)
wherein Rf represents a perfluoropolyoxyalkylene group represented by the general formula (3) below, 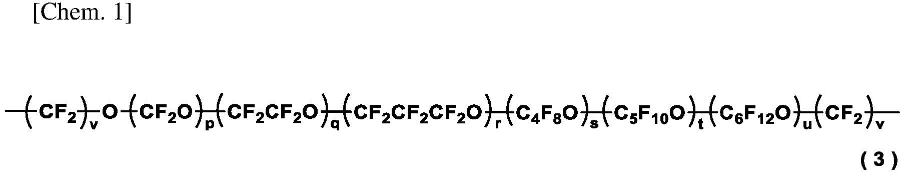 wherein p, q, r, s, t and u each independently represent an integer of 0 to 450, p + q + r + s + t + u is an integer of 20 to 450, fluorooxyalkylene units each parenthesized with p, q, r, s, t and u may be arranged in an either block or random manner, and v's each independently represent an integer of 1 to 3,
L's each independently represent a single bond, an oxygen atom, a sulfur atom, or a divalent organic group, M's each independently represent a single bond, a nitrogen atom, a silicon atom, a carbon atom, a phosphorus atom, a group including any of the above atoms, or a divalent to octavalent organic group, W's each independently represent an alkenyl group or a monovalent organic group having an alkenyl group serving as a terminal group, a's each independently represent an integer of 1 to 7, Q's each independently represent a single bond or a divalent organic group, Y's each independently represent a divalent organic group having an alkenyl group, b's each independently represent an integer of 1 to 10, and B's each independently represent a hydrogen atom, an alkyl group having 1 to 4 carbon atoms, or a halogen atom;
(B) a fluorine-containing organohydrogen polysiloxane having two or more silicon-bonded hydrogen atoms per molecule, in an amount to provide 0.5 to 5 moles of the silicon-bonded hydrogen atoms (SiH groups) in the component (B) to 1 mole of the alkenyl groups in the component (A);
(C) a hydrosilylation catalyst in an amount to provide a catalytic amount; and
(D) 10 to 40 parts by weight of a hydrophobic silica powder having a BET specific surface area of 50 m²/g or more.

2. The heat-curable perfluoropolyether rubber composition according to claim 1, wherein in the formula (1) or (2) of the component (A), Rf is a perfluoropolyoxyalkylene group represented by the general formula (3') below: 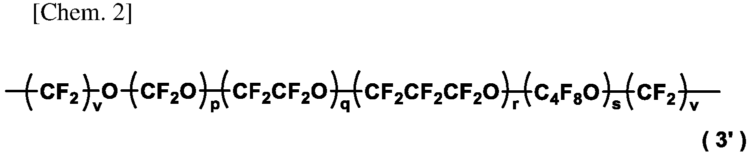 wherein p, q, r, s and v are the same as above, p + q + r + s is an integer of 20 to 450, and fluorooxyalkylene units each parenthesized with p, q, r and s may be arranged in an either block or random manner.

3. The heat-curable perfluoropolyether rubber composition according to claim 1, wherein surfaces of particles of the hydrophobic silica powder of the component (D) are hydrophobized with at least one organosilicon compound selected from an organochlorosilane, an organoalkoxysilane, an organodisilazane and a cyclic organopolysilazane.

4. The heat-curable perfluoropolyether rubber composition according to claim 1, wherein an amount of carbon deposited on surfaces of particles of the hydrophobic silica powder of the component (D) is 0.1% to 20% by weight of a total amount of the hydrophobic silica powder.

5. The heat-curable perfluoropolyether rubber composition according to claim 1, further comprising (E) a hydrosilylation controlling agent.

6. The heat-curable perfluoropolyether rubber composition according to any one of claims 1 to 5, for use in injection molding.
